# EUROPEAN PATENT APPLICATION

(11) **EP 2 765 805 A1**
(43) Date of publication of application: **13.08.2014**
(21) Application number: 12849851.6
(22) Date of filing: 14.11.2012
(51) Int. Cl.: H04W 36/24

(54) **RADIO LINK FAILURE COUNTING METHOD, RELATED DEVICE AND COMMUNICATION SYSTEM**

(30) Priority: 14.11.2011 CN 201110359772
(71) Applicant: Huawei Technologies Co., Ltd., Shenzhen, Guangdong 518129 (CN)
(72) Inventor: WANG, Xuelong, Shenzhen Guangdong 518129 (CN); OLOFSSON, Henrik, Shenzhen Guangdong 518129 (CN); ZHANG, Hongzhuo, Shenzhen Guangdong 518129 (CN); ZHANG, Huan, Shenzhen Guangdong 518129 (CN)
(74) Representative: Pfenning, Meinig & Partner GbR
(86) International application number: PCT/CN2012/084557
(87) International publication number: WO 2013/071856

(57) **Abstract**

Embodiments of the present invention disclose a radio link failure statistics method, a related apparatus, and a communications system, which are used to distinguish between CIO configuration reasons causing a radio link failure, so as to collect statistics on an exceptional handover in a classifying manner for use as an input to different optimization algorithms, thereby ensuring correctness of an optimization result. A method of the embodiments of the present invention mainly includes: sending, by a source base station, identifier information to a user equipment, where the identifier information carries an identifier of a CIO configuration reason, and receiving, by the source base station, a first radio link failure indication sent by a first target base station, where the first radio link failure indication is sent by the first target base station to the source base station after the first target base station receives a Radio Resource Control protocol RRC reestablishment request message sent by the user equipment, and the RRC reestablishment request message carries the identifier of the CIO configuration reason.

## Description

### CROSS-REFERENCE TO RELATED APPLICATION

This application claims priority to Chinese Patent Application No. CN 201110359772.0, filed with the Chinese Patent Office on November 14, 2011, and entitled "RADIO LINK FAILURE STATISTICS METHOD, RELATED APPARATUS, AND COMMUNICATIONS SYSTEM", which is incorporated herein by reference in its entirety.

### TECHNICAL FIELD

The present invention relates to the field of a wireless communications technology, and in particular, to a radio link failure statistics method, a related apparatus, and a communications system.

### BACKGROUND

A handover in a Long Term Evolution (LTE, Long Term Evolution) system adopts a triggering manner based on an event such as an A3 event and an A4 event. Ocn in the A3 and A4 events is a cell individual offset (CIO, Cell Individual Offset), and a related handover event may become easy or difficult to trigger by increasing or decreasing a CIO value, so that it becomes easy or difficult for a handover to occur. Three abnormal handovers caused by inappropriate settings of a CIO are defined in R9 and R10 protocols of the 3rd Generation Partnership Project (3GPP, The 3rd Generation Partnership Project): a too late handover, a too early handover, and a handover to a wrong cell. If a CIO is modified inappropriately, a handover becomes easy to trigger, resulting in a too early handover, or a handover becomes difficult to trigger, resulting in a too late handover.

In mobility robustness optimization (MRO, Mobility Robustness Optimization), detection of three major problems, namely, a too late handover, a too early handover, and a handover to a wrong cell, in a network is based on a radio link failure (RLF, Radio Link Failure) event.

The MRO collects statistics on a related abnormal handover by using a received radio link failure indication (RLF indication) or a handover report (Hand Over report), and then adjusts a CIO between cells to find an appropriate CIO value, so as to achieve the objectives of reducing abnormal handovers and improving handover performance.

In a cellular mobile communications system, user distribution may be uneven, and therefore load is usually imbalanced between cells, some cells having high load, and some cells having low load. In this case, radio resources in high-load cells are insufficient and cannot satisfy quality of service (QoS, Quality of Service) requirements of users, and radio resources are wasted in low-load cells. To improve utilization of radio resources, mobility load balance (MLB, Mobility Load Balance) optimization is performed, that is, an edge user in a high-load cell is handed over to a low-load cell, so as to implement an approximate load balance between cells. During MIB optimization, a handover between neighboring cells is usually made easy or difficult to occur by modifying a CIO between the neighboring cells, so as to achieve the objective of handing over a user in a high-load cell to a neighboring low-load cell in advance to implement a load balance. During MLB, a source cell usually increases a CIO with a neighboring cell, so that a handover becomes easy to occur from the source cell to a target cell, an edge user in a high-load cell is handed over to a neighboring low-load cell, and the load of the source cell is reduced. Meanwhile, in the target cell, a handover becomes difficult to occur from the target cell to the source cell by reducing a CIO with the source cell, so as to prevent the transferred user from being handed over back.

Both the MRO optimization and the MLB optimization may probably modify a CIO, and the modification of a CIO may cause a too early handover or a too late handover, resulting in a radio link failure, a handover failure, a call drop, or the like. However, in the prior art, in a statistics process of an event related to a radio link failure, only the number of times of a radio link failure can be counted to adjust a CIO when a subsequent adjustment and optimization period arrives, so that an error may occur in an optimization result.

### SUMMARY

The present invention provides a radio link failure statistics method, a related apparatus, and a communications system, which are configured to distinguish between CIO configuration reasons causing a radio link failure, so as to collect statistics on an abnormal handover in a classifying manner for use as an input to different optimization algorithms, thereby ensuring correctness of an optimization result.

One aspect of the present invention provides a radio link failure statistics method, including:
sending, by a source base station, identifier information to a user equipment, where the identifier information is used to indicate a configuration reason of a mobility parameter; and
receiving, by the source base station, a first radio link failure indication sent by a first target base station;
where the first radio link failure indication has the configuration reason of the mobility parameter.

Another aspect of the present invention provides a radio link failure statistics method, including:
receiving, by a first target base station, a first radio link failure indication sent by a source base station, where the first radio link failure indication is sent by the source base station to the first target base station after the source base station receives a radio resource control RRC reestablishment request message sent by a user equipment, and the first radio link failure indication and the RRC reestablishment request message have a configuration reason of a mobility parameter.

Another aspect of the present invention provides a radio link failure statistics method, including:
sending, by a source base station, identifier information to a user equipment, where the identifier information is used to indicate a configuration reason of a mobility parameter;
receiving, by the source base station, a radio resource control RRC reestablishment request message sent by the user equipment, where the RRC reestablishment request message has the configuration reason of the mobility parameter; and
determining, by the source base station, that a handover occurs on the user equipment too early, and collecting statistics on the number of times of an abnormal handover in a classifying manner according to the configuration reason of the mobility parameter.

Another aspect of the present invention provides a radio link failure statistics method, including:
receiving, by a user equipment, identifier information sent by a source base station, where the identifier information has a configuration reason of a first mobility parameter; and
saving, by the user equipment, the configuration reason of the first mobility parameter in a radio link failure report or a radio resource control RRC reestablishment request message.

Another aspect of the present invention provides a radio link failure statistics method, including:
receiving, by a target base station, a first radio link failure indication sent by a source base station, where the first radio link failure indication is sent by the source base station to the target base station after the source base station receives an RRC reestablishment request message sent by a user equipment; if reestablishment by the user equipment fails, the first radio link failure indication carries a radio resource control reconfiguration message; if the reestablishment by the user equipment succeeds, the first radio link failure indication includes a radio link failure report, and the radio resource control reconfiguration message is saved in the radio link failure report; and the radio resource control reconfiguration message is sent by the source base station to the user equipment, and the radio resource control reconfiguration message carries a mobility parameter; and
comparing, by the target base station, the mobility parameter in the radio resource control reconfiguration message and a current mobility parameter of the target base station; if they are different, skipping counting an abnormal handover related to the mobility parameter in the radio resource control reconfiguration message in the number of times of an abnormal handover related to the current mobility parameter of the target base station.

Another aspect of the present invention provides a radio link failure statistics method, including:
receiving, by a source base station, a radio resource control RRC reestablishment request message that is sent by a user equipment after a handover occurs too early;
acquiring, by the source base station according to the RRC reestablishment request message, that a mobility parameter was delivered to the user equipment; and
collecting statistics, by the source base station, on the number of times of an abnormal handover in a classifying manner according to a configuration reason of the mobility parameter.

Another aspect of the present invention provides a radio link failure statistics method, including:
receiving, by a first target base station, a first radio link failure indication sent by a source base station;
acquiring, by the first target base station according to the first radio link failure indication, that a mobility parameter was delivered by the source base station to a user equipment; and
collecting statistics, by the first target base station, on the number of times of an abnormal handover in a classifying manner according to a configuration reason of the mobility parameter.

Another aspect of the present invention provides a base station, including:
a receiver, configured to send identifier information to a user equipment, where the identifier information is used to indicate a configuration reason of a mobility parameter, where
the receiver is further configured to receive a first radio link failure indication sent by a first target base station; and
the first radio link failure indication has the configuration reason of the mobility parameter.

Another aspect of the present invention provides a base station, including:
a transmitter, configured to send identifier information to a user equipment, where the identifier information is used to indicate a configuration reason of a mobility parameter;
a receiver, configured to receive a radio resource control RRC reestablishment request message sent by the user equipment, where the RRC reestablishment request message has the configuration reason of the mobility parameter; and
a processor, configured to determine that a handover occurs on the user equipment too early, and collect statistics on the number of times of an abnormal handover in a classifying manner according to the configuration reason of the mobility parameter.

Another aspect of the present invention provides a user equipment, including:
a receiver, configured to receive identifier information sent by a source base station, where the identifier information has a configuration reason of a first mobility parameter; and
a processor, configured to save the configuration reason of the first mobility parameter in a radio link failure report or a radio resource control RRC reestablishment request message.

Another aspect of the present invention provides a base station, including:
a receiver, configured to receive a radio resource control RRC reestablishment request message that is sent by a user equipment after a handover occurs too early; and
a processor, configured to acquire, according to the RRC reestablishment request message, that a mobility parameter was delivered to the user equipment, and collect statistics on the number of times of an abnormal handover in a classifying manner according to a configuration reason of the mobility parameter.

Another aspect of the present invention provides a base station, including:
a receiver, configured to receive a first radio link failure indication sent by a source base station; and
a processor, configured to acquire, according to the first radio link failure indication, that a mobility parameter was delivered by the source base station to a user equipment, where
the processor is further configured to collect statistics on the number of times of an abnormal handover in a classifying manner according to a configuration reason of the mobility parameter.

As can be seen from the foregoing technical solutions, the embodiments of the present invention have the following advantages:

In the radio link failure statistics method provided by the embodiments of the present invention, CIO configuration reasons causing a radio link failure are distinguished, so as to collect statistics on an abnormal handover in a classifying manner for use as an input to different optimization algorithms, thereby ensuring correctness of an optimization result.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings.
FIG. 1 is a schematic diagram of an embodiment of a radio link failure statistics method according to an embodiment of the present invention;
FIG. 2 is a schematic diagram of another embodiment of a radio link failure statistics method according to an embodiment of the present invention;
FIG. 3 is a schematic diagram of another embodiment of a radio link failure statistics method according to an embodiment of the present invention;
FIG. 4 is a schematic diagram of another embodiment of a radio link failure statistics method according to an embodiment of the present invention;
FIG. 5 is a schematic diagram of another embodiment of a radio link failure statistics method according to an embodiment of the present invention;
FIG. 6 is a schematic diagram of another embodiment of a radio link failure statistics method according to an embodiment of the present invention;
FIG. 7 is a schematic diagram of another embodiment of a radio link failure statistics method according to an embodiment of the present invention;
FIG. 8 is a schematic diagram of an embodiment of a communications system according to an embodiment of the present invention;
FIG. 9 is a schematic diagram of another embodiment of a communications system according to an embodiment of the present invention;
FIG. 10 is a schematic diagram of another embodiment of a communications system according to an embodiment of the present invention;
FIG. 11 is a schematic diagram of another embodiment of a communications system according to an embodiment of the present invention;
FIG. 12 is a schematic diagram of an embodiment of a base station according to an embodiment of the present invention; and
FIG. 13 is a schematic diagram of another embodiment of a communications system according to an embodiment of the present invention.

### DESCRIPTION OF EMBODIMENTS

Embodiments of the present invention provide a radio link failure statistics method, a related apparatus, and a communications system, which are used to distinguish between CIO configuration reasons causing a radio link failure, so as to collect statistics on an abnormal handover in a classifying manner for use as an input to different optimization algorithms, thereby ensuring correctness of an optimization result.

To make the objectives, characteristics, and advantages of the present invention clearer and more comprehensible, the following describes the technical solutions of the present invention clearly and completely with reference to the accompanying drawings of the embodiments of the present invention. Apparently, the embodiments described below are merely a part rather than all of the embodiments of the present invention. All other embodiments obtained by a person skilled in the art based on the embodiments of the present invention all belong to the protection scope of the present invention.

In mobility robustness optimization, detection of three major problems, namely, a too late handover, a too early handover, and a handover to a wrong cell, in a network is based on a radio link failure event. Introductions to the three abnormal handovers in the embodiments of the present invention, namely, a too late handover, a too early handover, and a handover to a wrong cell, are specified as:

A too late handover indicates that an RLF occurs in a source cell before a user equipment (UE, User Equipment) initiates a handover or is in a handover process, and then the UE initiates Radio Resource Control protocol (RRC, Radio Resource Control) reestablishment in a non-source cell. The reestablishment may succeed or may also fail. In order that a source base station can identify such an abnormal handover, namely, the too late handover, a first target base station in which the reestablishment is performed sends a first radio link failure indication (1st RLF indication) to a source base station in which an RLF occurs, so that the source base station performs determination and collects statistics, and adjusts a handover parameter when a subsequent adjustment and optimization period arrives, thereby reducing or avoiding occurrence of such an abnormal handover. To perform related optimization, it is defined in R10 that when the UE experiences an RLF or a handover failure (HOF, Hand Over Failure), the UE records some related information before the RLF or the HOF, such as a source cell in which the RLF or the HOF occurs, a target cell, and related reference signal receiving power (RSRP, Reference Signal Receiving Power); these pieces of information form a radio link failure report (RLF report) defined in the standard; and after the UE records the RLF report, the UE reports the RLF report to the first target base station of reestablishment or new establishment when performing RRC reestablishment or RRC new establishment. In the 3GPP R9 protocol, no matter whether the reestablishment by the UE succeeds or fails, the first target base station only sends the 1st RLF indication to the source base station; however, when the reestablishment succeeds, the 1st RLF indication includes the RLF report, and if the reestablishment fails, the 1st RLF indication does not include the RLF report. In the 3GPP R10 protocol, if the reestablishment by the UE fails, after the UE subsequently initiates new RRC establishment in a second target base station, the new base station sends a second radio link failure indication (2nd, RLF indication) to a base station to which a source cell belongs, where the 2nd RLF indication includes the RLF report, and the source cell collects statistics and performs optimization according to the RLF report.

A too early handover includes two cases. One case is: An RLF occurs shortly after a UE is successfully handed over from a source cell to a target cell, and then the UE performs RRC reestablishment in the source cell; according to a principle of a too late handover, a source base station sends a 1st RLF indication to a target base station; however, when discovering that the time between the reestablishment and the latest successful handover is below a preset threshold, the target base station determines that a too early handover actually occurs, and the target base station sends a handover report (Hand over report) to the source base station, so that the source base station collects statistics on the too early handover. The other case is: a handover failure occurs in a handover process of the UE from the source base station to the target base station, the UE performs reestablishment back in the source base station, and in this case, signaling does not need to be sent between base stations.

A handover to a wrong cell indicates that an RLF occurs shortly after a UE is successfully handed over from a source cell to a target cell, and then the UE performs RRC reestablishment in a base station that is neither a source base station nor a target base station; according to a principle of a too late handover, a source base station sends a 1st RLF indication to a target base station; however, when discovering that the time between the reestablishment and the latest successful handover is below a threshold, the target base station determines that a handover to a wrong cell actually occurs; the target base station sends a Handover report to the source base station, so that the source base station collects statistics on a handover to a wrong cell.

A mobility parameter may be a cell individual offset CIO. Or, a person skilled in the art may understand that the mobility parameter may also be another parameter used for migrating or handing over a user equipment from a source network to a target network. The CIO in the following embodiments can be replaced with the mobility parameter in the present invention, which is not further described herein.

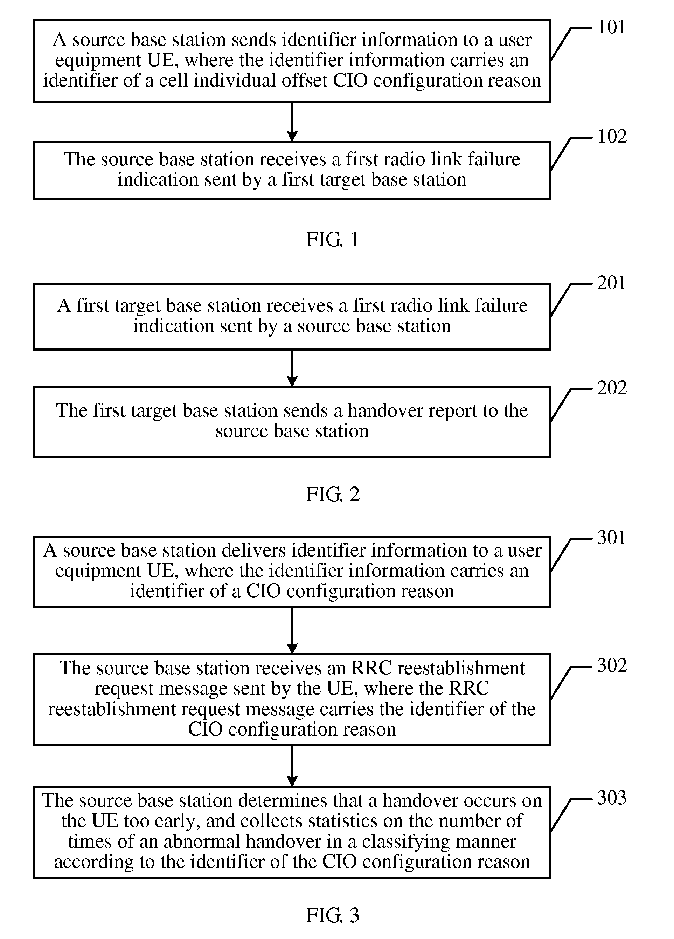

The following introduces an embodiment of a radio link failure statistics method according to an embodiment of the present invention. Referring to FIG. 1, the method may include:
101: A source base station sends identifier information to a user equipment UE, where the identifier information is used to indicate a configuration reason of a mobility parameter.

Optionally, the mobility parameter may be a cell individual offset CIO. Or, a person skilled in the art may understand that the mobility parameter may also be another parameter used for migrating or handing over a user equipment from a source network to a target network.

Optionally, the configuration reason of the mobility parameter is mobility load balance MLB or energy conservation.

Optionally, the identifier information may carry an identifier of a cell individual offset CIO configuration reason.

After receiving the identifier information sent by the source base station, the user equipment adds the identifier of the CIO configuration reason to a Radio Resource Control protocol (RRC, Radio Resource Control) reestablishment request message. The user equipment sends an RRC reestablishment request message to a first target base station, and the first target base station sends a first radio link failure indication to the source base station. When reestablishment by the user equipment fails, the first target base station adds the identifier of the CIO configuration reason to the first radio link failure indication, and when the reestablishment by the user equipment succeeds, the first target base station adds the identifier of the CIO configuration reason to a radio link failure report included in the first radio link failure indication.

The RRC reestablishment request message carries the identifier of the cell individual offset (CIO, Cell Individual Offset) configuration reason, and the identifier of the CIO configuration reason is carried in the identifier information that is sent by the source base station to the UE, and is saved by the UE.

In the embodiment of the present invention, the UE performs reestablishment in the first target base station, and the UE sends the RRC reestablishment request message to the first target base station, where the RRC reestablishment request message carries the identifier of the CIO configuration reason; and the first target base station may receive the RRC reestablishment request message sent by the UE.

In the embodiment of the present invention, the source base station sends the identifier information to the UE. The identifier information carries the identifier of the CIO configuration reason, so that the UE adds the identifier to the radio link failure report. In an actual application, the identifier information specifically may be delivered by using a radio resource control reconfiguration (RRC, Radio Resource Control Reconfiguration) message or a handover command. The source base station may deliver the radio resource control reconfiguration message to the UE, and add the identifier of the CIO configuration reason to the radio resource control reconfiguration message. The source base station may also deliver the handover command to the UE, and add the identifier of the CIO configuration reason to the handover command.

In an actual application, the CIO configuration reason specifically may include: mobility load balance MLB or energy conservation, that is, the CIO configuration reason for a radio link failure may be that the source base station performs MLB optimization, or the CIO configuration reason for a radio link failure may also be that the source base station aims at energy conservation (that is, power consumption is reduced). Therefore, that the source base station collects statistics on an abnormal handover in a classifying manner according to the CIO configuration reason corresponding to the CIO specifically may be that the source base station collects statistics on the number of times of an abnormal handover according to the MLB or the energy conservation corresponding to the CIO separately.

It should be noted that, for the UE, after receiving the identifier information sent by the source base station, the UE saves the identifier of the CIO configuration reason.

102: The source base station receives the first radio link failure indication sent by the first target base station.

If the reestablishment by the user equipment fails, the first radio link failure indication carries the identifier of the CIO configuration reason. If the reestablishment by the user equipment succeeds, the first radio link failure indication includes the radio link failure report, and the UE adds the identifier of the CIO configuration reason to the radio link failure report.

In the embodiment of the present invention, after the source base station receives the first radio link failure indication sent by the first target base station in step 102, the method may further include: collecting statistics, by the source base station, on the number of times of an abnormal handover in a classifying manner according to the identifier of the CIO configuration reason carried in the first radio link failure indication or the identifier of the CIO configuration reason in the radio link failure report.

It should be noted that, after the source base station receives the first radio link failure indication sent by the first target base station in step 102, the method further includes the following step: if the reestablishment by the user equipment fails, receiving, by the source base station, a second radio link failure indication sent by a second target base station, where the second radio link failure indication includes a radio link failure report, and the second target base station is a base station to which the UE sends a new RRC establishment request message after the reestablishment fails.

After the source base station receives the second radio link failure indication sent by the second target base station, the method further includes the following step:
collecting statistics, by the source base station, on the number of times of an abnormal handover in a classifying manner according to the identifier of the CIO configuration reason in the radio link failure report included in the second radio link failure indication.

It should be noted that, the first target base station and the second target base station may be a same base station, that is, after the reestablishment fails, the UE sends a new RRC establishment request message to the first target base station. Certainly, the second target base station and the first target base station may also be different base stations, that is, after the reestablishment fails, the UE sends a new RRC establishment request message to a new base station.

The following describes the embodiment of FIG. 1 in detail by using an example.

For example, after receiving a radio resource control reconfiguration message (or a handover command including an MLB) that includes an MLB (or another reason such as energy conservation) identifier and is delivered by a source base station, a UE saves an identifier of the CIO configuration reason. The UE adds the identifier to an RLF report, and performs reestablishment in a first target base station. If an RRC reestablishment request message includes the MLB identifier saved by the UE, for the 3GPP R9 protocol, the first target base station sends a 1st RLF indication including the MLB identifier or a 1st RLF indication of the RLF report including the MLB identifier to the source base station. For the 3GPP R10 protocol, the first target base station sends the 1st RLF indication to the source base station. If the 1st RLF indication includes the MLB identifier, the source base station does not collect any statistics, and after a second target base station sends a 2nd RLF indication to the source base station, the source base station collects statistics on one abnormal handover from the source base station to the first target base station in a classifying manner according to cell identifier information in the 2nd RLF indication and the MLB identifier in the RLF report, and according to the CIO configuration reason.

In the embodiment of the present invention, a first target base station receives an RRC reestablishment request message sent by a user equipment, and sends a first radio link failure indication to a source base station, and the source base station receives the first radio link failure indication sent by the first target base station. Because when reestablishment by the user equipment fails, the first radio link failure indication carries an identifier, and when the reestablishment by the user equipment succeeds, the first radio link failure indication includes a radio link failure report, and the radio link failure report carries an identifier of a CIO configuration reason, the source base station needs to collect statistics on the number of times of an abnormal handover in a classifying manner according to a CIO configuration reason corresponding to a CIO for use as an input to different optimization algorithms, thereby ensuring correctness of an optimization result.

The following introduces another embodiment of a radio link failure statistics method according to an embodiment of the present invention. Referring to FIG. 2, the method may include:
201: A first target base station receives a first radio link failure indication sent by a source base station.

The first radio link failure indication is sent by the source base station to the first target base station after the source base station receives an RRC reestablishment request message sent by a UE, where the first radio link failure indication and the RRC reestablishment request message have a configuration reason of a mobility parameter.

Optionally, if reestablishment by the user equipment fails, the first radio link failure indication carries an identifier of a CIO configuration reason, the source base station sends, to the UE, identifier information to carry the identifier of the CIO configuration reason; and if the reestablishment by the user equipment succeeds, the first radio link failure indication includes a radio link failure report, and the radio link failure report carries the identifier of the CIO configuration reason.

In the embodiment of the present invention, the source base station sends the identifier information to the UE, where the identifier information carries the identifier of the CIO configuration reason, and the UE adds the identifier of the CIO configuration reason to the radio link failure report. The identifier information specifically may be delivered by using a radio resource control reconfiguration message or a handover command. The source base station increases a CIO, so that a handover from the source base station to the first target base station occurs in advance, and a handover occurs on the UE too early. The UE sends the RRC reestablishment request message to the source base station when the UE has just experienced one successful handover and a dwell time of the UE in the first target base station is less than a preset threshold. The UE performs reestablishment in the source base station, and the source base station receives the RRC reestablishment request message, and sends the first radio link failure indication to the first target base station. When the reestablishment by the user equipment fails, the first radio link failure indication carries the identifier of the CIO configuration reason, and when the reestablishment by the user equipment succeeds, the first radio link failure indication includes the radio link failure report.

It should be noted that, in the embodiment of the present invention, in addition to the identifier of the CIO configuration reason, the identifier information further carries cell information, where the cell information is a source cell identifier and a target cell identifier at which the CIO aims, so that, in addition to the identifier of the CIO configuration reason, the UE further adds the cell information to the radio link failure report. The cell information records the source cell identifier and the target cell identifier which are aimed at. For example, the cell information is represented by using (A->B), in which A is a source cell identifier, and B is a target cell identifier. When an RLF occurs on the UE, the UE saves an MLB identifier attached with the cell information in the RLF report, and adds the MLB identifier attached with the cell information to the RRC reestablishment request initiated to the source base station, where the cell identifier specifically may refer to an evolved cell global identity (ECGI, Evolved Cell Global Identity), or may also be another identifier, as long as the identifier can uniquely identify a cell to distinguish the cell from another cell.

It should be noted that, in an actual application, a high-load source base station may select a first target base station that has only one target cell. That is, for an edge UE, at one time, only one neighboring cell functions as the target cell, only one CIO needs to be configured for the target cell, and only a source cell and a target cell which are aimed at need to be recorded in the cell information. The high-load source base station may also select a first target base station having multiple target cells. That is, for an edge UE, at one time, multiple neighboring cells function as the target cells, and multiple CIOs for the multiple target cells may be configured. The cell information is the source cell identifier and the target cell identifier at which the CIO aims, for example, at which two cells in the cell information the CIO aims, for example, CIO (1->2), CIO (1->3), and CIO (1->4). When an RLF occurs on a UE, the UE saves an MLB identifier attached with the cell information in an RLF report, the MLB identifier attached with the cell information is carried when the UE initiates reestablishment, and only when a first target base station, to which a CIO target cell (herein referring to 2, 3, or 4) that is configured based on MLB belongs, receives the reestablishment request including the identifiers, statistics are collected on an abnormal handover related to the MLB.

It should be noted that, the embodiment of the present invention may further include: if the reestablishment by the UE fails, collecting statistics, by the first target base station, on the number of times of an abnormal handover in a classifying manner according to the CIO configuration reason.

Optionally, the method may further include 202: The first target base station sends a handover report to the source base station.

The handover report carries the identifier of the CIO configuration reason, so that the source base station collects statistics on the number of times of an abnormal handover in a classifying manner according to the CIO configuration reason after receiving the handover report.

It should be noted that, if the reestablishment by the UE fails, the UE initiates new RRC establishment to a second target base station, and the second target base station sends a second radio link failure indication to the first target base station. Before step 202, the method may further include: receiving, by the first target base station, the second radio link failure indication sent by the second target base station, where the second target base station is a base station to which the UE sends a new RRC establishment request message after the reestablishment fails.

The following describes the embodiment of FIG. 2 in detail by using an example.

For example, an RLF occurs after a UE is successfully handed over from a source base station to a first target base station, and a dwell time of the UE in the first target base station is below a preset threshold. Then the UE saves an MLB identifier (or another reason, such as energy conservation) in an RLF report, and performs reestablishment back in the source base station. That is, a handover of the UE from the source base station to the first target base station occurs too early. Because the RLF occurs after the UE receives an MLB-based radio resource control reconfiguration message and before the UE receives a handover command, the UE saves an identifier after receiving the MLB-based radio resource control reconfiguration message including the identifier; the radio resource control reconfiguration message based on the MLB identifier controls a handover between the source base station and the first target base station, and reestablishment required by statistics on an abnormal handover related to the MLB occurs in the source base station or the first target base station. The cell information is attached when the source base station adds the MLB identifier to the delivered MLB-based radio resource control reconfiguration message, for example, at which two cells the cell information aims, such as (A->B) (A is the source cell identifier, and B is the target cell identifier). The cell identifier specifically may refer to an evolved cell global identity, or may also be another identifier, as long as the identifier can uniquely identify a cell to distinguish the cell from another cell. When an RLF occurs on the UE, the UE saves the MLB identifier attached with the cell information in the RLF report, and adds the MLB identifier attached with the cell information to the RRC reestablishment request initiated to the source base station. If the reestablishment succeeds, the source base station sends a 1st RLF indication to the first target base station, where the RLF report in the 1st RLF indication includes the MLB identifier attached with the cell information. The first target base station has sent an HO report to the source base station, and has added the MLB identifier therein. After receiving the HO report, the source base station collects statistics on one MLB-based abnormal handover from the source base station to the first target base station in a classifying manner according to the CIO configuration reason. If the reestablishment fails, for the 3GPP R9 protocol, the first target base station collects statistics on one MLB-based abnormal handover from the first target base station to the source base station in a classifying manner according to the CIO configuration reason. Meanwhile, the first target base station has sent the HO report to the source base station, and has added the MLB identifier therein. After receiving the HO report, the source base station collects statistics on one MLB-based abnormal handover from the source base station to the first target base station. For the 3GPP R10 protocol, the first target base station collects statistics on one MLB-based abnormal handover from the first target base station to the source base station in a classifying manner according to the CIO configuration reason. The HO report is temporarily not sent to the source base station, and the HO report including the MLB identifier is sent to the source base station after a 2nd RLF indication is received.

In the embodiment of the present invention, a first target base station receives an RRC reestablishment request message sent by a user equipment, and sends a first radio link failure indication to a source base station. Because when reestablishment by the user equipment fails, the first radio link failure indication carries an identifier, and when the reestablishment by the user equipment succeeds, the first radio link failure indication includes a radio link failure report, and the radio link failure report carries an identifier of a CIO configuration reason, the source base station needs to collect statistics on the number of times of an abnormal handover in a classifying manner according to a CIO configuration reason corresponding to a CIO for use as an input to different optimization algorithms, thereby ensuring correctness of an optimization result.

The following introduces another embodiment of a radio link failure statistics method according to an embodiment of the present invention. Referring to FIG. 3, the method may include:
301: A source base station delivers identifier information to a user equipment UE, where the identifier information is used to indicate a configuration reason of a mobility parameter.
   In the embodiment of the present invention, the source base station sends the identifier information to the UE, where the identifier information may carry an identifier of a CIO configuration reason, and the UE adds the identifier of the CIO configuration reason to a radio link failure report. The identifier information specifically may be delivered by using a radio resource control reconfiguration message or a handover command.
302: The source base station receives an RRC reestablishment request message sent by the UE, where the RRC reestablishment request message carries the configuration reason of the mobility parameter.
   The source base station increases a CIO, so that a handover from the source base station to a first target base station occurs in advance, and a handover occurs on the UE too early. After the handover fails, the UE performs reestablishment in the source base station, and sends the RRC reestablishment request message to the source base station, and the source base station receives the RRC reestablishment request message.
303: The source base station determines that the handover occurs on the UE too early, and collects statistics on the number of times of an abnormal handover in a classifying manner according to the configuration reason of the mobility parameter.

The source base station determines that the handover of the UE from the source base station to the first target base station occurs too early, and collects statistics on one abnormal handover according to the identifier of the CIO configuration reason in the RRC reestablishment request message.

In the embodiment of the present invention, a handover occurs on a UE too early, and the UE performs reestablishment in a source base station, so that the source base station collects statistics on the number of times of an abnormal handover in a classifying manner according to a CIO configuration reason for use as an input to different optimization algorithms, thereby ensuring correctness of an optimization result.

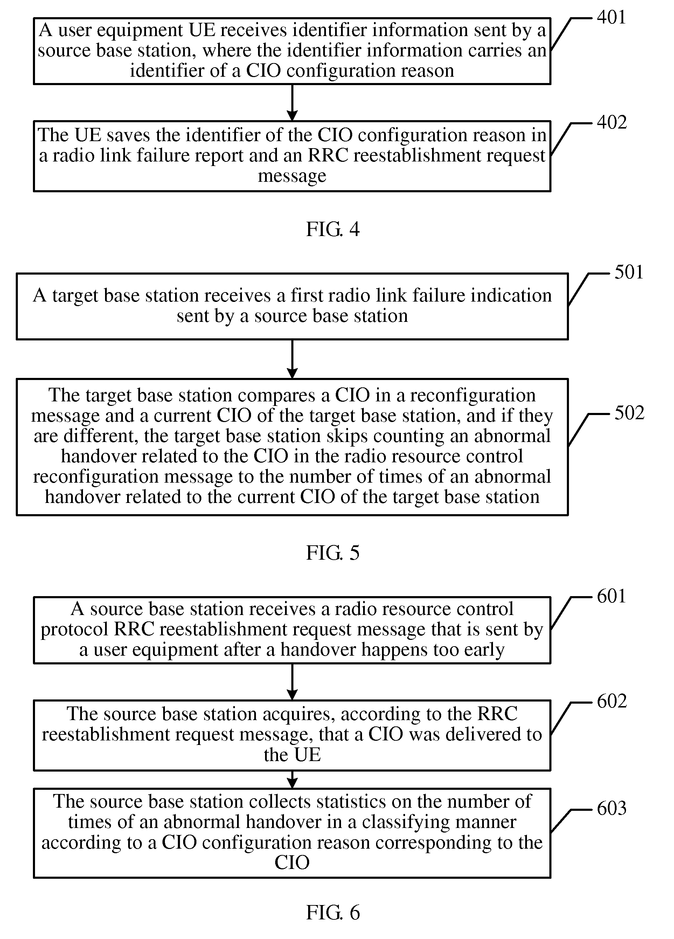

The following introduces another embodiment of a radio link failure statistics method according to an embodiment of the present invention. Referring to FIG. 4, the method may include:
401: A user equipment UE receives identifier information sent by a source base station, where the identifier information carries a configuration reason of a mobility parameter.
   In the embodiment of the present invention, the source base station sends the identifier information to the UE, where the identifier information carries an identifier of a CIO configuration reason, and the UE adds the identifier of the CIO configuration reason to a radio link failure report. The identifier information specifically may be delivered by using a radio resource control reconfiguration message or a handover command.
402: The UE saves the configuration reason of the mobility parameter in the radio link failure report and an RRC reestablishment request message.

Optionally, the UE acquires the identifier of the CIO configuration reason from the identifier information after receiving the identifier information, and saves the identifier of the CIO configuration reason in the radio link failure report or the RRC reestablishment request message.

After the UE saves the identifier of the CIO configuration reason in the radio link failure report and the RRC reestablishment request message, the method further includes:
if the UE is successfully handed over from the source base station to a target base station, when a CIO configuration reason in a radio resource control reconfiguration message that is received again is the same as the CIO configuration reason in the identifier, continuing to save the identifier, and when the CIO configuration reason in the radio resource control reconfiguration message that is received again is different from the CIO configuration reason in the identifier, updating the CIO configuration reason in the identifier.

It should be noted that the target base station described herein is the first target base station described in the embodiments of FIG. 1, FIG. 2, and FIG. 3.

For example, after receiving a radio resource control reconfiguration message (or a handover command) that includes an MLB identifier (or another reason, such as energy conservation) and is delivered by a source base station, a UE saves an identifier of a CIO configuration reason. If the UE is successfully handed over from the source base station to a first target base station, when the UE is connected to the first target base station, a CIO in a received radio resource control reconfiguration message is an MLB-based value. Then, the UE removes a source MLB identifier delivered by the source base station, or the UE still saves the identifier, and performs an update when receiving again a radio resource control reconfiguration message including a CIO. If the CIO that is received again is non-MLB, the UE removes the previously saved MLB identifier, and saves the new identifier. If the CIO that is received again is still MLB, the UE continues to save the identifier.

In the embodiment of the present invention, a UE acquires an identifier of a CIO configuration reason from identifier information after receiving the identifier information from a source base station, and saves the identifier of the CIO configuration reason in a radio link failure report or an RRC reestablishment request message, so that when initiating reestablishment subsequently, the UE can add the identifier as a basis for a base station to collect statistics in a classifying manner.

The following introduces another embodiment of a radio link failure statistics method according to an embodiment of the present invention. Referring to FIG. 5, the method may include:
501: A target base station receives a first radio link failure indication sent by a source base station.
   The first radio link failure indication is sent by the source base station to the target base station after the source base station receives an RRC reestablishment request message sent by a UE. When reestablishment by the user equipment fails, the first radio link failure indication carries a radio resource control reconfiguration message, and when the reestablishment by the user equipment succeeds, the first radio link failure indication includes a radio link failure report, and the radio resource control reconfiguration message is saved in the radio link failure report. The radio resource control reconfiguration message is sent by the source base station to the UE, and the radio resource control reconfiguration message carries a CIO.
   In the embodiment of the present invention, the source base station sends the radio resource control reconfiguration message to the UE. The source base station increases a CIO, so that a handover from the source base station to the target base station occurs in advance, and a handover occurs on the UE too early. The UE sends the RRC reestablishment request message to the source base station when the UE has just experienced one successful handover and a dwell time of the UE in the target base station is less than a preset threshold. The source base station receives the RRC reestablishment request message, and sends the first radio link failure indication to the target base station. When the reestablishment by the user equipment fails, the first radio link failure indication carries the radio resource control reconfiguration message, and when the reestablishment by the user equipment succeeds, the first radio link failure indication includes the radio link failure report, and the radio resource control reconfiguration message is saved in the radio link failure report.
502: The target base station compares the CIO in the radio resource control reconfiguration message and a current CIO of the target base station, and if they are different, the target base station skips counting an abnormal handover related to the CIO in the radio resource control reconfiguration message in the number of times of an abnormal handover related to the current CIO of the target base station.

In the embodiment of the present invention, after receiving the first radio link failure indication sent by the source base station, the target base station compares the CIO in the radio resource control reconfiguration message carried in the first radio link failure indication and the current CIO of the target base station, and if they are different, the target base station skips counting the abnormal handover related to the CIO in the radio resource control reconfiguration message in the number of times of an abnormal handover related to the current CIO of the target base station. The classification and statistics method in the foregoing embodiments is used when statistics are collected in a classifying manner, which is not further described herein.

In the embodiment of the present invention, a target base station receives a first radio link failure indication sent by a source base station. When reestablishment by a user equipment fails, the first radio link failure indication carries a radio resource control reconfiguration message, and when the reestablishment by the user equipment succeeds, the first radio link failure indication includes a radio link failure report, and the radio resource control reconfiguration message is saved in the radio link failure report. The target base station compares a CIO in the radio resource control reconfiguration message and a current CIO of the target base station, and if they are different, the target base station skips counting an abnormal handover related to the CIO in the radio resource control reconfiguration message in the number of times of an abnormal handover related to the current CIO of the target base station, so that the target base station collects statistics on the number of times of an abnormal handover in a classifying manner according to a CIO configuration reason corresponding to the CIO for use as an input to different optimization algorithms, thereby ensuring correctness of an optimization result.

The following introduces a radio link failure statistics method according to an embodiment of the present invention. As shown in FIG. 6, the method includes the following steps:
601: A source base station receives a Radio Resource Control protocol RRC reestablishment request message that is sent by a user equipment after a handover occurs too early.
   In the embodiment of the present invention, the source base station increases a CIO, so that a handover from the source base station to a target base station occurs in advance, and a handover occurs on the UE too early. After the handover fails, the UE performs reestablishment in the source base station. That is, the UE sends the RRC reestablishment request message to the source base station, and the source base station receives the RRC reestablishment request message sent by the UE.
602: The source base station acquires, according to the RRC reestablishment request message, that a CIO was delivered to the UE.
   In the embodiment of the present invention, after receiving the RRC reestablishment request message sent by the UE, the source base station acquires, from the RRC reestablishment request message, that the CIO was delivered by the source base station to the UE. In an actual application, it specifically may be: the source base station queries and acquires context (context) of the UE according to a cell radio network temporary identity (CRNTI, Cell Radio Network Temporary Identify) in the RRC reestablishment request message, and the source base station acquires, according to the context, that the CIO was delivered to the UE.
603: The source base station collects statistics on the number of times of an abnormal handover in a classifying manner according to a CIO configuration reason corresponding to the CIO.

In the embodiment of the present invention, after the source base station acquires that the CIO was delivered to the UE, the source base station collects statistics on the number of times of an abnormal handover in a classifying manner according to the CIO configuration reason corresponding to the CIO. That is, when collecting statistics on the number of times of an abnormal handover, the source base station needs to distinguish between different CIO configuration reasons for a radio link failure for use as an input to different optimization algorithms, thereby ensuring correctness of an optimization result.

In an actual application, the CIO configuration reason specifically may include: mobility load balance MLB or energy conservation. That is, the CIO configuration reason for a radio link failure may be that the source base station performs MLB optimization, or the reason for a radio link failure may also be that the source base station aims at energy conservation (that is, power consumption is reduced). Therefore, that the source base station collects statistics on an abnormal handover in a classifying manner according to the CIO configuration reason corresponding to the CIO specifically may be that the source base station collects statistics on the number of times of an abnormal handover according to the MLB or the energy conservation corresponding to the CIO separately. For example, if the source base station performs MLB optimization, and the source base station collects statistics on one abnormal handover related to the MLB, when a subsequent MRO adjustment and optimization period arrives, the source base station adjusts the parameter of the CIO according to the number of times that is counted excluding another reason such as MLB, thereby reducing or avoiding occurrence of such an abnormal handover.

It should be noted that, in the embodiment of the present invention, if the RRC reestablishment request message received by the source base station carries an identifier of the CIO configuration reason, that the source base station collects statistics on the number of times of an abnormal handover in a classifying manner according to the CIO configuration reason corresponding to the CIO specifically may be: collecting statistics, by the source base station, on the number of times of an abnormal handover in a classifying manner according to the identifier of the CIO configuration reason. That is, when collecting statistics on the number of times of an abnormal handover, the source base station may distinguish, according to the identifier, between different CIO configuration reasons for a radio link failure.

In the embodiment of the present invention, a source base station increases a CIO, so that a handover from the source base station to a target base station occurs in advance, and then a handover occurs on a UE too early. After the handover fails, the UE performs reestablishment in the source base station. Meanwhile, the source base station needs to collect statistics on the number of times of an abnormal handover in a classifying manner according to a CIO configuration reason corresponding to the CIO for use as an input to different optimization algorithms, thereby ensuring correctness of an optimization result.

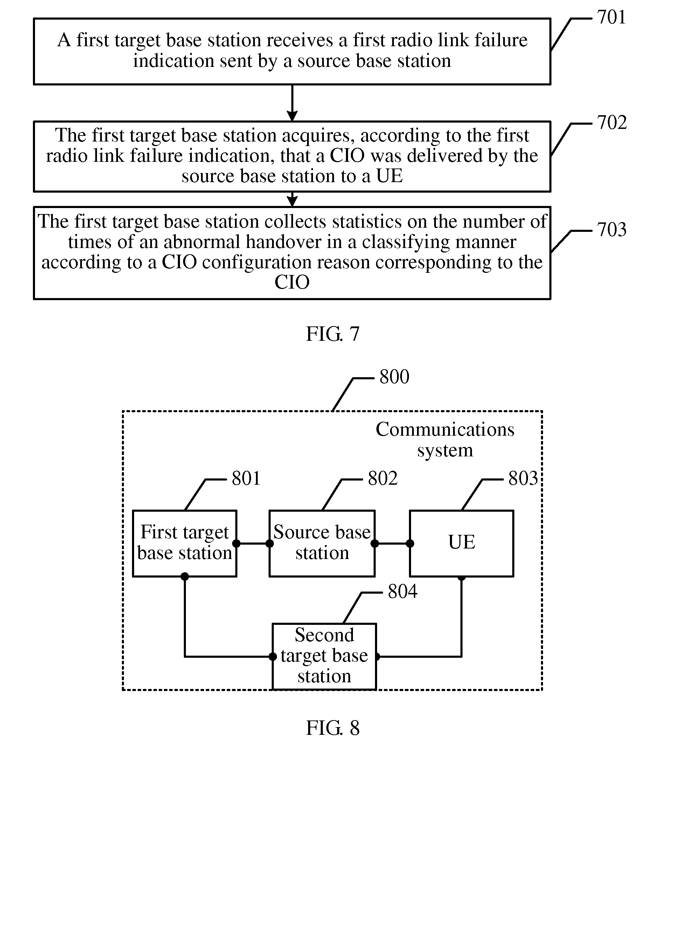

The following introduces another embodiment of a radio link failure statistics method according to an embodiment of the present invention. Referring to FIG. 7, the method may include:
701: A first target base station receives a first radio link failure indication sent by a source base station.
   In the embodiment of the present invention, because the first target base station reduces a CIO, so as to delay a handover from the source base station to the first target base station, a handover occurs on a UE too late. Before the first target base station receives a handover command, an RLF happens in the first target base station, and the UE performs reestablishment in the source base station. That is, after the handover occurs on the UE too late, the UE sends an RRC reestablishment request message to the source base station, the source base station receives the RRC reestablishment request message sent by the UE, and the source base station sends the first radio link failure indication, that is, 1st RLF indication, to the first target base station. The first target base station first receives the first radio link failure indication sent by the source base station.
702: The first target base station acquires, according to the first radio link failure indication, that a CIO was delivered by the source base station to the UE.
   In the embodiment of the present invention, after receiving the first radio link failure indication sent by the source base station, the first target base station acquires, from the first radio link failure indication, that the CIO was delivered by the source base station to the UE. In an actual application, it specifically may be: the first target base station queries and acquires context of the UE according to a CRNTI in the first radio link failure indication, and the first target base station acquires, according to the context, that the CIO was delivered to the UE.
703: The first target base station collects statistics on the number of times of an abnormal handover in a classifying manner according to a CIO configuration reason corresponding to the CIO.

In the embodiment of the present invention, after the first target base station acquires that the CIO was delivered by the source base station to the UE, the first target base station collects statistics on the number of times of an abnormal handover in a classifying manner according to the CIO configuration reason corresponding to the CIO. That is, when collecting statistics on the number of times of an abnormal handover, the first target base station needs to distinguish between different CIO configuration reasons for a radio link failure for use as an input to different optimization algorithms, thereby ensuring correctness of an optimization result.

In an actual application, the CIO configuration reason specifically may include: mobility load balance MLB or energy conservation. That is, the CIO configuration reason for a radio link failure may be that the first target base station performs MLB optimization, or the CIO configuration reason for a radio link failure may also be that the first target base station aims at energy conservation (that is, power consumption is reduced). Therefore, that the first target base station collects statistics on an abnormal handover in a classifying manner according to the CIO configuration reason corresponding to the CIO specifically may be that the first target base station collects statistics on the number of times of an abnormal handover according to the MLB or the energy conservation corresponding to the CIO, separately.

It should be noted that, before the first target base station collects statistics on the number of times of an abnormal handover in a classifying manner according to a CIO configuration reason corresponding to the CIO, the method further includes the following step: recording, by the first target base station, that a handover from the first target base station to the source base station occurs too late. Then the first target base station counts the number of times of abnormal handovers in a classifying manner according to a CIO configuration reason corresponding to the CIO specifically may include the following steps:
receiving, by the first target base station, a second radio link failure indication sent by a second target base station, where the second target base station is a base station to which the UE sends a new RRC establishment request message after reestablishment fails;
acquiring, by the first target base station according to the second radio link failure indication, that the too late handover from the first target base station to the source base station is consistent with a too late handover that was recorded, where a reestablishment cell identifier in the second radio link failure indication is a target cell included in the first target base station; and
collecting statistics, by the first target base station, on the number of times of an abnormal handover in a classifying manner according to the CIO configuration reason.

It should be noted that, in the embodiment of the present invention, after the first target base station receives the second radio link failure indication sent by the second target base station, the method further includes: sending, by the first target base station, a handover report to the source base station, where the handover report carries the identifier of the CIO configuration reason, so that the source base station can collect statistics on the number of times of an abnormal handover in a classifying manner according to the identifier of the CIO configuration reason.

It should be noted that, in the embodiment of the present invention, after a first target base station receives a first radio link failure indication sent by a source base station in step 701, the method may further include the following steps:
storing, by the first target base station, a CRNTI in the first radio link failure indication; and
receiving, by the first target base station, a second radio link failure indication sent by a second target base station, where the second target base station is a base station to which the UE sends a new RRC establishment request message after the reestablishment fails, the second radio link failure indication includes a radio link failure report, and the radio link failure report carries a CRNTI of the UE.

That the first target base station collects statistics on the number of times of an abnormal handover in a classifying manner according to a CIO configuration reason corresponding to the CIO in step 703 specifically may be: when the stored CRNTI is the same as the CRNTI carried in the radio link failure report, collecting statistics, by the first target base station, on the number of times of an abnormal handover in a classifying manner according to the CIO configuration reason.

It should be noted that, in the embodiment of the present invention, after the first target base station receives the first radio link failure indication sent by the source base station, the method may further include the following steps:
when the first target base station acquires an RRC reestablishment request message that is sent to the source base station when the UE has just experienced one successful handover and a dwell time of the UE in the first target base station is less than a preset threshold, storing, by the first target base station, a CRNTI in the first radio link failure indication;
receiving, by the first target base station, a second radio link failure indication sent by a second target base station, where the second target base station is a base station to which the UE sends a new RRC establishment request message after the reestablishment fails, the second radio link failure indication includes a radio link failure report, and the radio link failure report carries a CRNTI of the UE; and
when the stored CRNTI is the same as the CRNTI carried in the radio link failure report, sending, by the first target base station, a handover report to the source base station, where the handover report carries an identifier of a CIO configuration reason.

The following describes the embodiment of FIG. 7 in detail by using an example.

For example, for the 3GPP R9 protocol, when first receiving a 1st RLF indication sent by a source base station, a first target base station may query and acquire context of a UE according to a CRNTI in the 1st RLF indication, and because it can be known from the context that the source base station delivered a CIO for the first target base station to the UE before an RLF occurs on the UE, and a CIO configuration reason corresponding to the CIO is MLB, the first target base station collects statistics on one abnormal handover from a target cell to a source cell according to the CIO configuration reason corresponding to the CIO, but does not collect statistics related to MRO.

For example, for the 3GPP R10 protocol, for a UE that fails to perform reestablishment, after a first target base station first receives a 1st RLF indication sent by a source base station, the first target base station knows by determining according to the foregoing determining method that the source base station delivered a CIO for the first target base station to the UE before an RLF occurs on the UE. The first target base station records an event that a handover from the first target base station to the source base station occurs too late, and then the UE sends a new RRC establishment request message in a second target base station (a base station that is neither the source base station nor the first target base station), and the second target base station sends a 2nd RLF indication to the first target base station where the RLF occurred. If it is known from the new RRC establishment request message that the handover from the first target base station to the source base station occurs too late, the too late handover is consistent with a too late handover that was recorded, and a reestablishment cell identifier is the first target base station, the first target base station collects statistics on one abnormal handover in a classifying manner according to a CIO configuration reason, and does not collect statistics related to MRO.

For example, if the UE is successfully handed over to the first target base station after the source base station increases the CIO, the UE receives, in the first target base station, an MLB-based CIO from the first target base station to the source base station, but the RLF occurs shortly after the UE dwells in the target cell, and the UE sends the RRC reestablishment request message to the source base station, that is, the handover occurs on the UE too early. In this case, the source base station sends the 1st RLF indication to the first target base station, the first target base station collects statistics on one MLB-based abnormal handover from the first target base station to the source base station according to the foregoing determining method, and determines that the UE is handed over from the source base station to the first target base station, and a dwell time of the UE in the first target base station is below a preset threshold. For the 3GPP R9 protocol, if a first target base station sends a handover report (HO report) to a source base station, and adds an identifier of a CIO configuration reason to the handover report, where the identifier can indicate that the CIO configuration reason is MLB, or another reason, such as energy conservation, after receiving the handover report, the source base station collects statistics on one MLB-based abnormal handover in a classifying manner according to the CIO configuration reason. For the 3GPP R10 protocol, if a first target base station temporarily does not send an HO report to a source base station, but records a related event method, after receiving a 2nd RLF indication, the first target base station sends the HO report to the source base station, and adds an identifier of a CIO configuration reason to the HO report, where the identifier can indicate that the CIO configuration reason is the MLB or another reason, such as energy conservation.

For example, for the 3GPP R10 protocol, to reduce correlated processing of the 1st RLF indication and the subsequent 2nd RLF indication that is performed by the source base station for the UE which fails to perform reestablishment, the following processing can be performed for the UE:
When the UE experiences a too late handover and an RLF occurs, the UE saves the current CRNTI in the RLF report. After receiving the 1st RLF indication, the first target base station determines the MLB-based abnormal handover according to the foregoing method, then the CRNTI in the 1st RLF indication is stored and the CRNTI is marked as the MLB (or another reason, such as energy conservation). When receiving the 2nd RLF indication including the RLF report, the first target base station performs determination according to the CRNTI in the RLF report in conjunction with the stored CRNTI, and when they are the same, the first target base station collects statistics on an abnormal handover in a classifying manner according to the CIO configuration reason.

When the UE experiences a too early handover and an RLF occurs, the UE saves the current CRNTI in the RLF report. After receiving the 1st RLF indication, the first target base station determines the MLB-based abnormal handover according to the foregoing method, and determines that the UE has just experienced one successful handover and a dwell time of the UE in the first target base station is less than a preset threshold (that is, a condition for a too early handover is satisfied), then the CRNTI in the 1st RLF indication is stored and is marked as MLB (or another reason, such as energy conservation), and the HO report is not sent temporarily. When receiving the 2nd RLF indication including the RLF report, the first target base station performs determination according to the CRNTI in the RLF report in conjunction with the stored CRNTI, and when they are the same, the first target base station sends the HO report to the source base station, and adds an identifier of the CIO configuration reason to the HO report.

In the embodiment of the present invention, a first target base station receives a first radio link failure indication sent by a source base station, acquires, according to the first radio link failure indication, that a CIO was delivered by the source base station to a UE, and collects statistics on an abnormal handover in a classifying manner according to a CIO configuration reason corresponding to the CIO. The first target base station needs to collect statistics on the number of times of an abnormal handover in a classifying manner according to the CIO configuration reason corresponding to the CIO for use as an input to different optimization algorithms, thereby ensuring correctness of an optimization result.

The foregoing embodiments introduce a radio link failure statistics method provided in the embodiments of the present invention, and the following introduces a related apparatus and a communications system related to the statistics method.

The following introduces another communications system according to an embodiment of the present invention. Referring to FIG. 8, a communications system 800 may include a first target base station 801, a source base station 802, and a UE 803.

The source base station 802 is configured to send identifier information to the UE 803, where the identifier information carries an identifier of a CIO configuration reason, so that the UE adds the identifier to a radio link failure report.

The UE 803 is configured to receive the identifier information sent by the source base station 802; add the identifier of the CIO configuration reason to the radio link failure report and an RRC reestablishment request message; and send the RRC reestablishment request message to the first target base station 801.

The first target base station 801 is configured to receive the RRC reestablishment request message sent by the UE 803, where the RRC reestablishment request message carries the identifier of the CIO configuration reason.

The first target base station 801 is configured to send a first radio link failure indication to the source base station 802, where when reestablishment by the user equipment fails, the first radio link failure indication carries the identifier, and when the reestablishment by the user equipment succeeds, the first radio link failure indication includes the radio link failure report.

The source base station 802 is configured to receive the first radio link failure indication sent by the first target base station 801.

In an actual application, the communications system 800 further includes a second target base station 804, configured to: when the reestablishment by the UE 803 fails, receive a new RRC reestablishment request message sent by the UE 803; and send a second radio link failure indication to the source base station 802, where the second radio link failure indication includes the radio link failure report.

The source base station 802 is further configured to: when the reestablishment by the UE fails, receive the second radio link failure indication sent by the second target base station 804; and collect statistics on the number of times of an abnormal handover in a classifying manner according to the identifier in the radio link failure report included in the second radio link failure indication.

In an actual application, the source base station 802 is further configured to collect statistics on the number of times of an abnormal handover in a classifying manner according to the identifier carried in the first radio link failure indication or the identifier in the radio link failure report.

It should be noted that, the first target base station and the second target base station may be a same base station, that is, after the reestablishment fails, the UE sends a new RRC establishment request message to the first target base station. Certainly, the second target base station and the first target base station may also be different base stations, that is, after the reestablishment fails, the UE sends a new RRC establishment request message to a new base station.

It should be noted that, because content such as information exchange between and an execution process of modules/units of the foregoing apparatus belongs to the same conception as a method embodiment of the present invention, it brings the same technical effects as the method embodiment of the present invention. For details, reference may be made to descriptions in the method embodiment of the present invention shown in FIG. 1, which is not further described herein.

In the embodiment of the present invention, a first target base station receives an RRC reestablishment request message sent by a user equipment UE, and sends a first radio link failure indication to a source base station. Because when reestablishment by the user equipment fails, the first radio link failure indication carries an identifier of a CIO configuration reason, and when the reestablishment by the user equipment succeeds, the first radio link failure indication includes a radio link failure report, and the radio link failure report carries the identifier of the CIO configuration reason, the source base station needs to collect statistics on the number of times of an abnormal handover in a classifying manner according to a CIO reason corresponding to a CIO for use as an input to different optimization algorithms, thereby ensuring correctness of an optimization result.

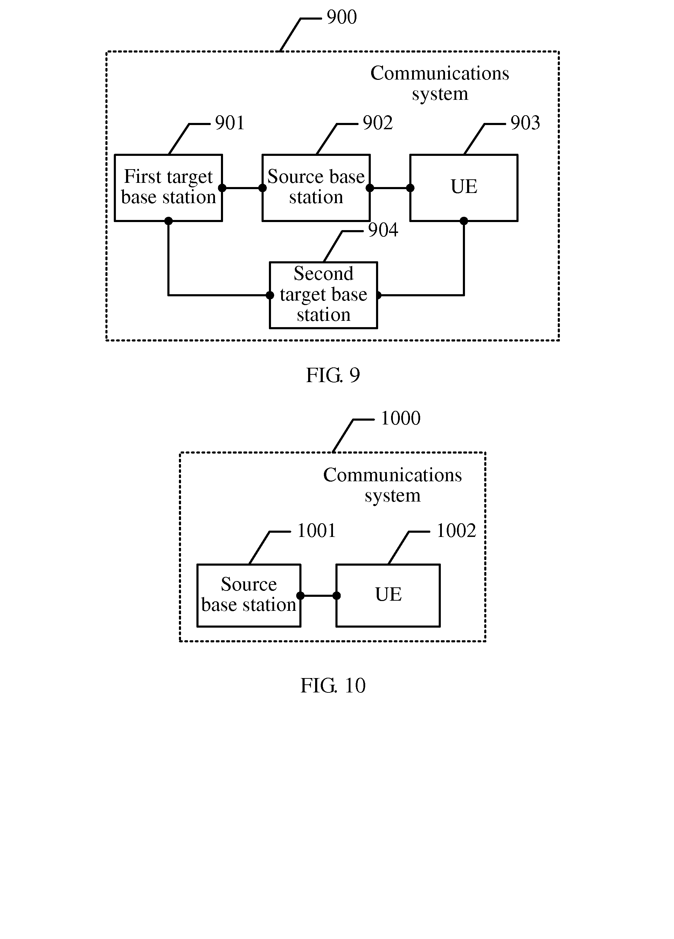

The following introduces another communications system according to an embodiment of the present invention. Referring to FIG. 9, a communications system 900 may include a first target base station 901, a source base station 902, and a UE 903.

The source base station 902 is configured to send identifier information to the UE 903, where the identifier information carries an identifier of a CIO configuration reason, so that the UE adds the identifier to a radio link failure report.

The UE 903 is configured to receive the identifier information sent by the source base station 902; add the identifier of the CIO configuration reason to the radio link failure report and an RRC reestablishment request message; and send the RRC reestablishment request message to the source base station 902.

The source base station 902 is configured to receive the RRC reestablishment request message sent by the UE 903; and send a first radio link failure indication to the first target base station 901, where when reestablishment by the user equipment fails, the first radio link failure indication carries the identifier, and when the reestablishment by the user equipment succeeds, the first radio link failure indication includes the radio link failure report.

The first target base station 901 is configured to receive the first radio link failure indication sent by the source base station 902, and send a handover report to the source base station 902, where the handover report carries the identifier of the CIO configuration reason.

The source base station 902 is configured to receive the handover report, and collect statistics on the number of times of an abnormal handover in a classifying manner according to the CIO configuration reason.

In an actual application, the first target base station 901 is further configured to: when the reestablishment by the UE fails, collect statistics on the number of times of an abnormal handover in a classifying manner according to the CIO configuration reason.

In an actual application, the communications system 900 further includes: a second target base station 904, configured to: after the reestablishment by the UE 903 fails, receive a new RRC establishment request message sent by the UE 903, and send a second radio link failure indication to the first target base station 901. The first target base station 901 is further configured to receive the second radio link failure indication sent by the second target base station 904.

It should be noted that, the UE 903 is further configured to: if the UE 903 is successfully handed over from the source base station to the first target base station, when a CIO configuration reason in a radio resource control reconfiguration message that is received again is the same as the CIO configuration reason in the identifier, continue to save the identifier, and when the CIO configuration reason in the radio resource control reconfiguration message that is received again is different from the CIO configuration reason in the identifier, update the CIO configuration reason in the identifier.

It should be noted that, because content such as information exchange between and an execution process of modules/units of the foregoing apparatus belongs to the same conception as a method embodiment of the present invention, it brings the same technical effects as the method embodiment of the present invention. For details, reference may be made to descriptions in the method embodimen of the present inventiont shown in FIG. 2, which is not further described herein.

In the embodiment of the present invention, a first target base station receives an RRC reestablishment request message sent by a user equipment UE, and sends a first radio link failure indication to a source base station. Because when reestablishment by the user equipment fails, the first radio link failure indication carries an identifier, and when the reestablishment by the user equipment succeeds, the first radio link failure indication includes a radio link failure report, and the radio link failure report carries an identifier of a CIO configuration reason, the source base station needs to collect statistics on the number of times of an abnormal handover in a classifying manner according to a CIO configuration reason corresponding to a CIO for use as an input to different optimization algorithms, thereby ensuring correctness of an optimization result.

The following introduces another communications system according to an embodiment of the present invention. Referring to FIG. 10, a communications system 1000 may include a source base station 1001 and a UE 1002.

The source base station 1001 is configured to send identifier information to the UE 1002, where the identifier information carries an identifier of a cell individual offset CIO configuration reason, so that the UE 1002 adds the identifier to a radio link failure report.

The UE 1002 is configured to receive the identifier information sent by the source base station 1001; add the identifier of the CIO configuration reason to the radio link failure report; and send an RRC reestablishment request message to the source base station 1001.

The source base station 1002 is configured to receive the RRC reestablishment request message sent by the UE 1001, where the RRC reestablishment request message carries the identifier of the CIO configuration reason; determine that a handover occurs on the UE too early; and collect statistics on the number of times of an abnormal handover in a classifying manner according to the identifier of the CIO configuration reason.

It should be noted that, because content such as information exchange between and an execution process of modules/units of the foregoing apparatus belongs to the same conception as a method embodiment of the present invention, it brings the same technical effects as the method embodiment of the present invention. For details, reference may be made to descriptions in the method embodiment of the present invention shown in FIG. 3, which is not further described herein.

In the embodiment of the present invention, a handover occurs on a UE too early, and the UE performs reestablishment in a source base station, so that the source base station collects statistics on the number of times of an abnormal handover in a classifying manner according to a CIO configuration reason for use as an input to different optimization algorithms, thereby ensuring correctness of an optimization result.

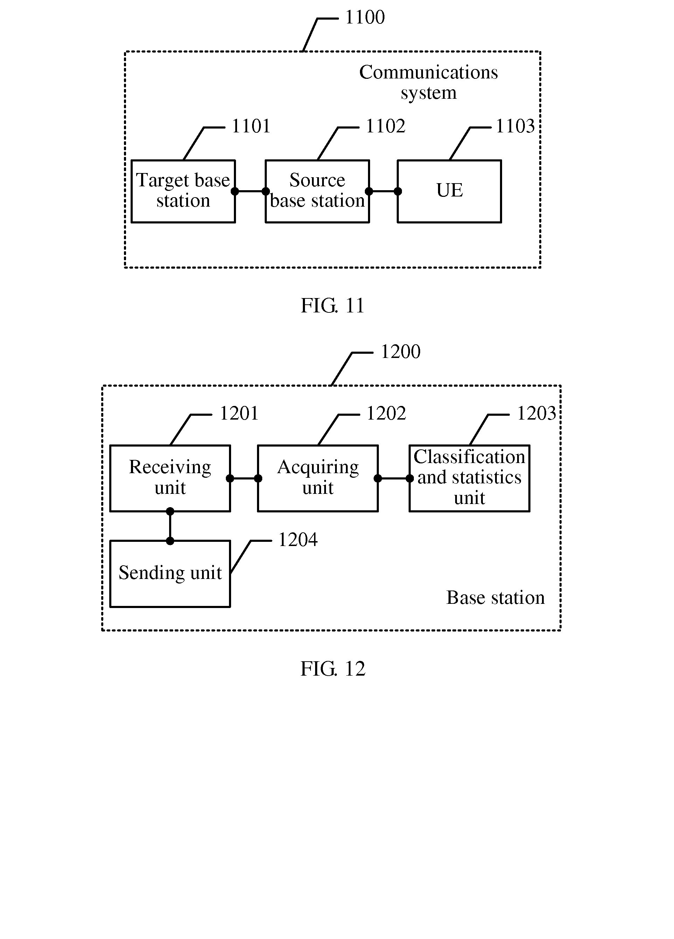

The following introduces another communications system according to an embodiment of the present invention. Referring to FIG. 11, a communications system 1100 may include a target base station 1101, a source base station 1102, and a UE 1103.

The source base station 1102 is configured to send a radio resource control reconfiguration message to the UE 1103.

The UE 1103 is configured to: receive the radio resource control reconfiguration message; save the radio resource control reconfiguration message in a radio link failure report; and send an RRC reestablishment request message to the source base station 1102, where when reestablishment by the user equipment fails, a first radio link failure indication carries the radio resource control reconfiguration message, and when the reestablishment by the user equipment succeeds, the first radio link failure indication includes the radio link failure report.

The source base station 1102 is configured to receive the RRC reestablishment request message sent by the UE 1103; and send the first radio link failure indication to the target base station 1101.

The target base station 1101 is configured to receive the first radio link failure indication sent by the source base station 1102; compare a CIO in the radio resource control reconfiguration message and a current CIO of the target base station, and if they are different, skip counting an abnormal handover related to the CIO in the radio resource control reconfiguration message in the number of times of an abnormal handover related to the current CIO of the target base station.

It should be noted that, because content such as information exchange between and an execution process of modules/units of the foregoing apparatus belongs to the same conception as the method embodiment of the present invention, it brings the same technical effects as the method embodiment of the present invention. For details, reference may be made to descriptions in the method embodiment shown of the present invention in FIG. 5, which is not further described herein.

In the embodiment of the present invention, a target base station receives a first radio link failure indication sent by a source base station. When reestablishment by a user equipment fails, the first radio link failure indication carries a radio resource control reconfiguration message, and when the reestablishment by the user equipment succeeds, the first radio link failure indication includes a radio link failure report, and the radio resource control reconfiguration message is saved in the radio link failure report. The target base station compares a CIO in the reconfiguration message and a current CIO of the target base station, and if they are different, the target base station skips counting an abnormal handover related to the CIO in the radio resource control reconfiguration message in the number of times of an abnormal handover related to the current CIO of the target base station, so that the target base station collects statistics on the number of times of an abnormal handover in a classifying manner according to a CIO configuration reason corresponding to the CIO for use as an input to different optimization algorithms, thereby ensuring correctness of an optimization result.

The following introduces a base station according to an embodiment of the present invention. As shown in FIG. 12, a base station 1200 includes:
a receiving unit 1201, configured to receive an RRC reestablishment request message that is sent by a UE after a handover occurs too early;
an acquiring unit 1202, configured to acquire, according to the RRC reestablishment request message, that a CIO was delivered to the UE; and
a classification and statistics unit 1203, configured to collect statistics on the number of times of an abnormal handover in a classifying manner according to a CIO configuration reason corresponding to the CIO.

In an actual application, for the acquiring unit 1202, one possible implementation manner is that the acquiring unit 1202 is specifically configured to query context of the UE according to a CRNTI in the RRC reestablishment request message; and acquire, according to the context, that the CIO was delivered to the UE.

In an actual application, for the acquiring unit 1203, when the CIO configuration reason includes mobility load balance MLB or energy conservation, one possible implementation manner is that the classification and statistics unit 1203 is specifically configured to collect statistics on the number of times of an abnormal handover according to MLB or energy conservation corresponding to the CIO, separately.

In an actual application, for the receiving unit 1201, the receiving unit 1201 is further configured to receive an RRC reestablishment request message that is sent by the UE after a handover occurs too late; meanwhile, the base station 1200 further includes: a sending unit 1204, configured to send a first radio link failure indication to a target base station.

It should be noted that, because content such as information exchange between and an execution process of modules/units of the foregoing apparatus belongs to the same conception as the method embodiment of the present invention, it brings the same technical effects as the method embodiment of the present invention. For details, reference may be made to descriptions in the method embodiment of the present invention shown in FIG. 6, which is not further described herein.

In the embodiment of the present invention, a source base station increases a CIO, so that a handover from the source base station to a target base station occurs in advance, and a handover occurs on a UE too early. After the handover fails, the UE performs reestablishment in the source base station. Meanwhile, a classification and statistics unit needs to collect statistics on the number of times of an abnormal handover in a classifying manner according to a CIO configuration reason corresponding to the CIO for use as an input to different optimization algorithms, thereby ensuring correctness of an optimization result.

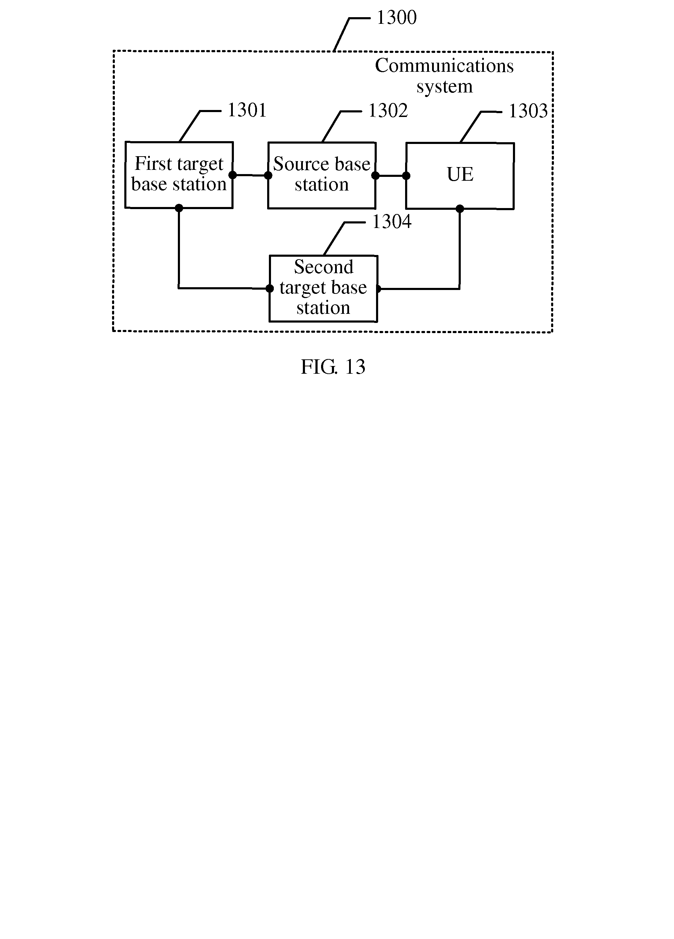

The following introduces a communications system according to an embodiment of the present invention. Referring to FIG. 13, a communications system 1300 may include a first target base station 1301, a source base station 1302, and a UE 1303.

The source base station 1302 is configured to deliver a CIO to the UE 1303.

The UE 1303 is configured to receive the CIO delivered by the source base station 1302; and send an RRC reestablishment request message to the source base station 1302.

The source base station 1302 is configured to receive the RRC reestablishment request message; and send a first radio link failure indication to the first target base station 1301.

The first target base station 1301 is configured to receive the first radio link failure indication sent by the source base station 1302; and acquire, according to the first radio link failure indication, that the CIO was delivered by the source base station to the user equipment UE.

The first target base station 1301 is configured to collect statistics on the number of times of an abnormal handover in a classifying manner according to a CIO configuration reason corresponding to the CIO.

In an actual application, the first target base station 1301 is further configured to record that a handover from the first target base station to the source base station occurs too late.

In an actual application, the first target base station 1301 is further configured to send a handover report to the source base station 1302, where the handover report carries an identifier of the CIO configuration reason.

In an actual application, the communications system 1300 further includes a second target base station 1304, configured to: after reestablishment by the UE 1303 fails, receive a new RRC reestablishment request message sent by the UE; send a second radio link failure indication to the first target base station 1301, where the second radio link failure indication includes a radio link failure report, and the radio link failure report carries a CRNTI of the UE.

The first target base station 1301 is further configured to store a CRNTI in the first radio link failure indication; and receive the second radio link failure indication sent by the second target base station 1304.

It should be noted that, because content such as information exchange between and an execution process of modules/units of the foregoing apparatus belongs to the same conception as the method embodiment of the present invention, it brings the same technical effects as the method embodiment of the present invention. For details, reference may be made to descriptions in the method embodiment of the present invention shown in FIG. 7, which is not further described herein.

In the embodiment of the present invention, a first target base station receives a first radio link failure indication sent by a source base station, acquires, according to the first radio link failure indication, that a CIO was delivered by the source base station to a UE, and collects statistics on an abnormal handover in a classifying manner according to a CIO configuration reason corresponding to the CIO. The first target base station needs to collect statistics on the number of times of an abnormal handover in a classifying manner according to the CIO configuration reason corresponding to the CIO for use as an input to different optimization algorithms, thereby ensuring correctness of an optimization result.

The following provides other embodiments for the communications system and the user equipment of the present invention, so that a network can acquire a configuration reason of a mobility parameter for use as an input to an optimization algorithm.

### Embodiment 1

A communications system includes a first target base station, a source base station, and a user equipment.

The source base station is configured to send identifier information to the user equipment, where the identifier information is used to indicate a configuration reason of a mobility parameter.

The user equipment is configured to receive the identifier information sent by the source base station; add the configuration reason of the mobility parameter to a radio link failure report and a radio resource control RRC reestablishment request message; and send the radio resource control RRC reestablishment request message to the first target base station.

The first target base station is configured to receive the radio resource control RRC reestablishment request message sent by the user equipment, where the RRC reestablishment request message carries an identifier of a CIO configuration reason.

The first target base station is configured to send a first radio link failure indication to the source base station, where when reestablishment by the user equipment fails, the first radio link failure indication carries the identifier, and when the reestablishment by the user equipment succeeds, the first radio link failure indication includes the radio link failure report.

The source base station is configured to receive the first radio link failure indication sent by the first target base station.

Further, the communications system further includes a second target base station, configured to: after the reestablishment by the user equipment fails, receive a new RRC reestablishment request message sent by the user equipment; send a second radio link failure indication to the source base station, where the second radio link failure indication includes the radio link failure report.

The source base station is further configured to: when the reestablishment by the user equipment fails, receive the second radio link failure indication sent by the second target base station; and collect statistics on the number of times of an abnormal handover in a classifying manner according to the identifier in the radio link failure report included in the second radio link failure indication.

Further, the source base station is further configured to collect statistics on the number of times of an abnormal handover in a classifying manner according to the identifier carried in the first radio link failure indication or the identifier in the radio link failure report.

Further, the second target base station and the first target base station are a same base station.

### Embodiment 2

A communications system includes a first target base station, a source base station, and a user equipment.

The source base station is configured to send identifier information to the user equipment, where the identifier information carries an identifier of a cell individual offset CIO configuration reason.

The user equipment is configured to receive the identifier information sent by the source base station; add the identifier of the CIO configuration reason to a radio link failure report and an RRC reestablishment request message; and send the RRC reestablishment request message to the source base station.

The source base station is configured to receive the RRC reestablishment request message sent by the user equipment; send a first radio link failure indication to the first target base station, where when reestablishment by the user equipment fails, the first radio link failure indication carries the identifier, and when the reestablishment by the user equipment succeeds, the first radio link failure indication includes the radio link failure report.

The first target base station is configured to receive the first radio link failure indication sent by the source base station; and send a handover report to the source base station, where the handover report carries the identifier of the CIO configuration reason.

The source base station is configured to receive the handover report, and collect statistics on the number of times of an abnormal handover in a classifying manner according to the CIO configuration reason.

Further, the first target base station is further configured to: when the reestablishment by the user equipment fails, collect statistics on the number of times of an abnormal handover in a classifying manner according to the CIO configuration reason.

Further, the communications system further includes a second target base station, configured to: after the reestablishment by the user equipment fails, receive a new RRC establishment request message sent by the user equipment; and send a second radio link failure indication to the first target base station.

The first target base station is further configured to receive the second radio link failure indication sent by the second target base station.

Further, the user equipment is further configured to: if the user equipment is successfully handed over from the source base station to the first target base station, when a CIO configuration reason in a radio resource control reconfiguration message that is received again is the same as the CIO configuration reason in the identifier, continue to save the identifier, and when the CIO configuration reason in the radio resource control reconfiguration message that is received again is different from the CIO configuration reason in the identifier, update the CIO configuration reason in the identifier.

### Embodiment 3

A communications system includes a source base station and a user equipment.

The source base station is configured to send identifier information to the user equipment, where the identifier information carries an identifier of a cell individual offset CIO configuration reason, so that the user equipment adds the identifier to a radio link failure report.

The user equipment is configured to receive the identifier information sent by the source base station; add the identifier of the CIO configuration reason to the radio link failure report; and send an RRC reestablishment request message to the source base station, where the RRC reestablishment request message carries the identifier of the CIO configuration reason.

The source base station is configured to receive the RRC reestablishment request message sent by the user equipment; and determine that a handover occurs on the user equipment too early, and collect statistics on the number of times of an abnormal handover in a classifying manner according to the identifier of the CIO configuration reason.

### Embodiment 4

A communications system includes a target base station, a source base station, and a user equipment.

The source base station is configured to send a radio resource control reconfiguration message to the user equipment, where the radio resource control reconfiguration message carries a cell individual offset CIO.

The user equipment is configured to: receive the radio resource control reconfiguration message; save the radio resource control reconfiguration message in a radio link failure report; and send an RRC reestablishment request message to the source base station.

The source base station is configured to receive the RRC reestablishment request message sent by the user equipment; send a first radio link failure indication to the target base station, where when reestablishment by the user equipment fails, the first radio link failure indication carries the radio resource control reconfiguration message, and when the reestablishment by the user equipment succeeds, the first radio link failure indication includes the radio link failure report, and the radio resource control reconfiguration message is saved in the radio link failure report.

The target base station is configured to receive the first radio link failure indication sent by the source base station; compare a CIO in the radio resource control reconfiguration message and a current CIO of the target base station; and if they are different, skip counting an abnormal handover related to the CIO in the radio resource control reconfiguration message in the number of times of an abnormal handover related to the current CIO of the target base station.

### Embodiment 5

A base station includes:
a receiving unit, configured to receive a Radio Resource Control protocol RRC reestablishment request message that is sent by a user equipment after a handover occurs too early;
an acquiring unit, configured to acquire, according to the RRC reestablishment request message, that a cell individual offset CIO was delivered to the user equipment; and
a classification and statistics unit, configured to collect statistics on the number of times of an abnormal handover in a classifying manner according to a CIO configuration reason corresponding to the CIO.

Further, the acquiring unit is specifically configured to query context of the user equipment according to a cell radio network temporary identifier CRNTI in the RRC reestablishment request message; and acquire, according to the context, that the CIO was delivered to the user equipment.

Further, the CIO configuration reason includes mobility load balance MLB or energy conservation.

The classification and statistics unit is specifically configured to collect statistics on the number of times of an abnormal handover according to the MLB or the energy conservation separately.

Further, the receiving unit is further configured to receive an RRC reestablishment request message that is sent by the user equipment after a handover occurs too late.

The base station further includes a sending unit, configured to send a first radio link failure indication to a target base station.

### Embodiment 6

A communications system includes a first target base station, a source base station, and a user equipment.

The source base station is configured to deliver a cell individual offset CIO to the user equipment.

The user equipment is configured to receive the CIO delivered by the source base station; and send an RRC reestablishment request message to the source base station.

The source base station is configured to receive the RRC reestablishment request message; and send a first radio link failure indication to the first target base station.

The first target base station is configured to receive the first radio link failure indication sent by the source base station; and acquire, according to the first radio link failure indication, that the CIO was delivered by the source base station to the user equipment.

The first target base station is configured to collect statistics on the number of times of an abnormal handover in a classifying manner according to a CIO configuration reason corresponding to the CIO.

Further, the first target base station is further configured to record that a handover from the first target base station to the source base station occurs too late.

Further, the first target base station is further configured to send a handover report to the source base station, where the handover report carries an identifier of the CIO configuration reason.

Further, the communications system further includes a second target base station, configured to: after reestablishment by the user equipment fails, receive a new RRC reestablishment request message sent by the user equipment; send a second radio link failure indication to the first target base station, where the second radio link failure indication includes a radio link failure report, and the radio link failure report carries a CRNTI of the user equipment.

The first target base station is further configured to store a CRNTI in the first radio link failure indication, and receive the second radio link failure indication sent by the second target base station.

### Embodiment 7

A base station in this embodiment can execute actions executed by the source base station in the foregoing embodiments, and the base station includes:
a receiver, configured to send identifier information to a user equipment, where the identifier information is used to indicate a configuration reason of a mobility parameter, where
the receiver is further configured to receive a first radio link failure indication sent by a first target base station; and
the first radio link failure indication has the configuration reason of the mobility parameter.

Optionally, if reestablishment by the user equipment fails, the first radio link failure indication carries the configuration reason of the mobility parameter; and
if the reestablishment by the user equipment succeeds, a radio link failure report included in the first radio link failure indication carries the configuration reason of the mobility parameter, where the second target base station is a base station to which the user equipment sends a new RRC establishment request message after the reestablishment fails.

Optionally, if the reestablishment by the user equipment fails, the receiver is further configured to receive a second radio link failure indication sent by the second target base station, where the second radio link failure indication includes a radio link failure report, and the radio link failure report included in the second radio link failure indication carries the configuration reason of the mobility parameter.

Optionally, the base station further includes a processor, configured to collect statistics on the number of times of an abnormal handover in a classifying manner according to the configuration reason of the mobility parameter which is carried in the first radio link failure indication, or carried in the radio link failure report included in the first radio link failure indication, or carried in the radio link failure report included in the second radio link failure indication.

Optionally, the identifier information is carried by a radio resource control reconfiguration message or a handover command.

Optionally, the mobility parameter is a cell individual offset CIO.

Optionally, the configuration reason of the mobility parameter is mobility load balance MLB or energy conservation.

### Embodiment 8

A base station in this embodiment can execute actions executed by the first target base station in the foregoing embodiments, and the base station includes:
a receiver, configured to receive a first radio link failure indication sent by a source base station, where the first radio link failure indication is sent by the source base station to the base station after the source base station receives a radio resource control RRC reestablishment request message sent by a user equipment, and the first radio link failure indication and the RRC reestablishment request message have a configuration reason of a mobility parameter.

Optionally, if reestablishment by the user equipment fails, the first radio link failure indication carries the configuration reason of the mobility parameter; and
if the reestablishment by the user equipment succeeds, the first radio link failure indication includes a radio link failure report, and the radio link failure report carries the configuration reason of the mobility parameter.

Optionally, the base station further includes a transmitter, configured to send a handover report to the source base station, where the handover report carries the configuration reason of the mobility parameter.

Optionally, the source base station sends, to the user equipment, identifier information to carry the configuration reason of the mobility parameter, where the identifier information further carries cell information, and the cell information is a source cell identifier and a target cell identifier at which the mobility parameter aims.

Optionally, the base station further includes a processor, configured to: if the reestablishment by the user equipment fails, collect statistics on the number of times of an abnormal handover in a classifying manner according to the configuration reason of the mobility parameter.

Optionally, the receiver is further configured to receive a second radio link failure indication sent by a second target base station, where the second radio link failure indication has the configuration reason of the mobility parameter, and the second target base station is a base station to which the user equipment sends a new RRC establishment request message after the reestablishment with the base station fails.

Optionally, the mobility parameter is a cell individual offset CIO.

Optionally, the configuration reason of the mobility parameter is mobility load balance MLB or energy conservation.

### Embodiment 9

A base station according to this embodiment can execute actions of the source base station in the foregoing embodiments, and the base station includes:
a transmitter, configured to send identifier information to a user equipment, where the identifier information is used to indicate a configuration reason of a mobility parameter;
a receiver, configured to receive a radio resource control RRC reestablishment request message sent by the user equipment, where the RRC reestablishment request message has the configuration reason of the mobility parameter; and
a processor, configured to determine that a handover occurs on the user equipment too early, and collect statistics on the number of times of an abnormal handover in a classifying manner according to the configuration reason of the mobility parameter.

Optionally, the mobility parameter is a cell individual offset CIO.

Optionally, the configuration reason of the mobility parameter is mobility load balance MLB or energy conservation.

### Embodiment 10

A user equipment provided by this embodiment can execute actions executed by the user equipment in the foregoing embodiments, and the user equipment includes:
a receiver, configured to receive identifier information sent by a source base station, where the identifier information has a configuration reason of a first mobility parameter; and
a processor, configured to save the configuration reason of the first mobility parameter in a radio link failure report or a radio resource control RRC reestablishment request message.

Optionally, the processor is further configured to: if the user equipment is successfully handed over from the source base station to a target base station, and when a configuration reason of a second mobility parameter in a received radio resource control reconfiguration message is the same as the configuration reason of the first mobility parameter, continue to save the configuration reason of the first mobility parameter; and
when the configuration reason of the second mobility parameter is different from the configuration reason of the first mobility parameter, update the configuration reason of the first mobility parameter in the identifier information as the configuration reason of the second mobility parameter.

### Embodiment 11

This embodiment provides a base station, the base station can execute actions executed by the source base station in the foregoing embodiments, and the base station includes:
a receiver, configured to receive a radio resource control RRC reestablishment request message that is sent by a user equipment after a handover occurs too early; and
a processor, configured to acquire, according to the RRC reestablishment request message, that a mobility parameter was delivered to the user equipment, and collect statistics on the number of times of an abnormal handover in a classifying manner according to a configuration reason of the mobility parameter.

Optionally, the processor is specifically configured to query context of the user equipment according to a cell radio network temporary identifier CRNTI in the RRC reestablishment request message;
acquire, according to the context, that the mobility parameter was delivered to the user equipment; and
collect statistics on the number of times of an abnormal handover in a classifying manner according to the configuration reason of the mobility parameter.

Optionally, the configuration reason of the mobility parameter includes mobility load balance MLB or energy conservation.

Optionally, the receiver is further configured to receive an RRC reestablishment request message that is sent by the user equipment after a handover occurs too late.

The base station further includes a transmitter, configured to send a first radio link failure indication to the base station.

### Embodiment 12

A base station according to this embodiment can execute actions executed by the first target base station in the foregoing embodiments, and the base station includes:
a receiver, configured to receive a first radio link failure indication sent by a source base station; and
a processor, configured to acquire, according to the first radio link failure indication, that a mobility parameter was delivered by the source base station to a user equipment, where
the processor is further configured to collect statistics on the number of times of an abnormal handover in a classifying manner according to a configuration reason of the mobility parameter.

Optionally, the receiver is further configured to receive a second radio link failure indication sent by a second target base station, where the second target base station is a base station to which the user equipment sends a new RRC establishment request message after reestablishment fails.

The processor is specifically configured to:
record that a handover from the base station to the source base station occurs too late; and
acquire, according to the second radio link failure indication, that the too late handover from the base station to the source base station is consistent with a too late handover that was recorded, and that a reestablishment cell identifier in the second radio link failure indication is a target cell included in the base station, and collect statistics on the number of times of an abnormal handover in a classifying manner according to the configuration reason of the mobility parameter.

Optionally, the base station further includes:
a transmitter, configured to send a handover report to the source base station, where the handover report carries the configuration reason of the mobility parameter.

Optionally, the base station further includes a memory, configured to store a cell radio network temporary identifier CRNTI in the first radio link failure indication.

The receiver is further configured to receive the second radio link failure indication sent by the second target base station, where the second target base station is a base station to which the user equipment sends a new RRC establishment request message after reestablishment fails, the second radio link failure indication includes a radio link failure report, and the radio link failure report carries a CRNTI of the user equipment.

The processor is specifically configured to:
when the stored CRNTI is the same as the CRNTI carried in the radio link failure report, collect statistics on the number of times of an abnormal handover in a classifying manner according to the configuration reason of the mobility parameter.

Optionally, the base station further includes a memory, configured to: when the base station acquires an RRC reestablishment request message that is sent to the source base station when the user equipment has just experienced one successful handover and a dwell time of the user equipment in the base station is less than a preset threshold, store the CRNTI in the first radio link failure indication.

The receiver is further configured to receive the second radio link failure indication sent by the second target base station, where the second target base station is a base station to which the user equipment sends a new RRC establishment request message after reestablishment fails, the second radio link failure indication includes the radio link failure report, and the radio link failure report carries the CRNTI of the user equipment.

The transmitter is further configured to: when the stored CRNTI is the same as the CRNTI carried in the radio link failure report, enable the first target base station to send a handover report to the source base station, where the handover report carries the configuration reason of the mobility parameter.

A person of ordinary skill in the art may understand that all or a part of the steps of the methods in the embodiments may be implemented by a program instructing relevant hardware. The program may be stored in a computer readable storage medium. The storage medium may include: a read-only memory, a magnetic disk, or an optical disc.

The foregoing introduces in detail a radio link failure statistics method, a related apparatus, and a communications system provided by the present invention. A person of ordinary skill in the art can make modifications to specific implementation manners and application scopes according to the idea of the present invention. To sum up, the content of the specification shall not be construed as a limitation to the present invention

## Claims

1. A radio link failure statistics method, comprising:
sending, by a source base station, identifier information to a user equipment, wherein the identifier information is used to indicate a configuration reason of a mobility parameter; and
receiving, by the source base station, a first radio link failure indication sent by a first target base station;
wherein the first radio link failure indication has the configuration reason of the mobility parameter.

2. The radio link failure statistics method according to claim 1, wherein:
if reestablishment by the user equipment fails, the first target base station adds the configuration reason of the mobility parameter to the first radio link failure indication; and
if the reestablishment by the user equipment succeeds, the first target base station adds the configuration reason of the mobility parameter in a radio link failure report comprised in the first radio link failure indication, wherein the second target base station is a base station to which the user equipment sends a new RRC establishment request message after the reestablishment fails.

3. The radio link failure statistics method according to claim 2, wherein the method further comprises:
if the reestablishment by the user equipment fails, receiving, by the source base station, a second radio link failure indication sent by the second target base station, wherein the second radio link failure indication comprises the radio link failure report, and the radio link failure report comprised in the second radio link failure indication carries the configuration reason of the mobility parameter.

4. The radio link failure statistics method according to claim 3, further comprising:
collecting statistics, by the source base station, on the number of times of an abnormal handover in a classifying manner according to the configuration reason of the mobility parameter which is carried in the first radio link failure indication, or carried in the radio link failure report comprised in the first radio link failure indication, or carried in the radio link failure report comprised in the second radio link failure indication.

5. The radio link failure statistics method according to any one of claims 1 to 4, wherein:
the identifier information is carried by a radio resource control reconfiguration message or a handover command.

6. The radio link failure statistics method according to any one of claims 1 to 5, wherein:
the mobility parameter is a cell individual offset CIO.

7. The radio link failure statistics method according to any one of claims 1 to 6, wherein:
the configuration reason of the mobility parameter is mobility load balance MLB or energy conservation.

8. The radio link failure statistics method according to any one of claims 1 to 7, wherein:
the first radio link failure indication is sent by the first target base station to the source base station after the first target base station receives a Radio Resource Control protocol RRC reestablishment request message sent by the user equipment, wherein the RRC reestablishment request message has the configuration reason of the mobility parameter.

9. The radio link failure statistics method according to any one of claims 3 to 8, wherein:
the second target base station and the first target base station are a same base station.

10. A radio link failure statistics method, comprising:
receiving, by a first target base station, a first radio link failure indication sent by a source base station, wherein the first radio link failure indication is sent by the source base station to the first target base station after the source base station receives a radio resource control RRC reestablishment request message sent by a user equipment, and the first radio link failure indication and the RRC reestablishment request message have a configuration reason of a mobility parameter.

11. The radio link failure statistics method according to claim 10, wherein:
if reestablishment by the user equipment fails, the first radio link failure indication carries the configuration reason of the mobility parameter; and
if the reestablishment by the user equipment succeeds, the first radio link failure indication comprises a radio link failure report, and the radio link failure report carries the configuration reason of the mobility parameter.

12. The radio link failure statistics method according to claim 10 or 11, further comprising:
sending, by the first target base station, a handover report to the source base station, wherein the handover report carries the configuration reason of the mobility parameter.

13. The radio link failure statistics method according to any one of claims 10 to 12, wherein:
the source base station sends, to the user equipment, identifier information to carry the configuration reason of the mobility parameter, wherein the identifier information further carries cell information, and the cell information is a source cell identifier and a target cell identifier at which the mobility parameter aims.

14. The radio link failure statistics method according to claim 11, wherein the method further comprises:
if the reestablishment by the user equipment fails, collecting statistics, by the first target base station, on the number of times of an abnormal handover in a classifying manner according to the configuration reason of the mobility parameter.

15. The radio link failure statistics method according to any one of claims 11 to 14, further comprising:
receiving, by the first target base station, a second radio link failure indication sent by a second target base station, wherein the second radio link failure indication has the configuration reason of the mobility parameter, and the second target base station is a base station to which the user equipment sends a new RRC establishment request message after the reestablishment fails.

16. The radio link failure statistics method according to any one of claims 10 to 15, wherein:
the mobility parameter is a cell individual offset CIO.

17. The radio link failure statistics method according to any one of claims 10 to 16, wherein:
the configuration reason of the mobility parameter is mobility load balance MLB or energy conservation.

18. A radio link failure statistics method, comprising:
sending, by a source base station, identifier information to a user equipment, wherein the identifier information is used to indicate a configuration reason of a mobility parameter;
receiving, by the source base station, a radio resource control RRC reestablishment request message sent by the user equipment, wherein the RRC reestablishment request message has the configuration reason of the mobility parameter; and
determining, by the source base station, that a handover occurs on the user equipment too early, and collecting statistics on the number of times of an abnormal handover in a classifying manner according to the configuration reason of the mobility parameter.

19. The radio link failure statistics method according to claim 18, wherein:
the mobility parameter is a cell individual offset CIO.

20. The radio link failure statistics method according to claim 18 or 19, wherein:
the configuration reason of the mobility parameter is mobility load balance MLB or energy conservation.

21. A radio link failure statistics method, comprising:
receiving, by a user equipment, identifier information sent by a source base station, wherein the identifier information has a configuration reason of a first mobility parameter; and
saving, by the user equipment, the configuration reason of the first mobility parameter in a radio link failure report or a radio resource control RRC reestablishment request message.

22. The radio link failure statistics method according to claim 21, wherein if the user equipment is successfully handed over from the source base station to a target base station, the method further comprises:
when a configuration reason of a second mobility parameter in a received radio resource control reconfiguration message is the same as the configuration reason of the first mobility parameter, continuing to save the configuration reason of the first mobility parameter; and
when the configuration reason of the second mobility parameter is different from the configuration reason of the first mobility parameter, updating the configuration reason of the first mobility parameter in the identifier information to be the configuration reason of the second mobility parameter.

23. A radio link failure statistics method, comprising:
receiving, by a target base station, a first radio link failure indication sent by a source base station, wherein the first radio link failure indication is sent by the source base station to the target base station after the source base station receives an RRC reestablishment request message sent by a user equipment; if reestablishment by the user equipment fails, the first radio link failure indication carries a radio resource control reconfiguration message; if the reestablishment by the user equipment succeeds, the first radio link failure indication comprises a radio link failure report, and the radio resource control reconfiguration message is saved in the radio link failure report; and the radio resource control reconfiguration message is sent by the source base station to the user equipment, and the radio resource control reconfiguration message carries a mobility parameter; and
comparing, by the target base station, the mobility parameter in the radio resource control reconfiguration message and a current mobility parameter of the target base station; if they are different, skipping counting an abnormal handover related to the mobility parameter in the radio resource control reconfiguration message in the number of times of an abnormal handover related to the current mobility parameter of the target base station.

24. The radio link failure statistics method according to claim 23, wherein the mobility parameter is a cell individual offset CIO.

25. A radio link failure statistics method, comprising:
receiving, by a source base station, a radio resource control RRC reestablishment request message that is sent by a user equipment after a handover occurs too early;
acquiring, by the source base station according to the RRC reestablishment request message, that a mobility parameter was delivered to the user equipment; and
collecting statistics, by the source base station, on the number of times of an abnormal handover in a classifying manner according to a configuration reason of the mobility parameter.

26. The radio link failure statistics method according to claim 25, wherein the acquiring, by the source base station according to the RRC reestablishment request message, that a mobility parameter was delivered to the user equipment comprises:
querying, by the source base station, context of the user equipment according to a cell radio network temporary identifier CRNTI in the RRC reestablishment request message; and
acquiring, by the source base station according to the context, that the mobility parameter was delivered to the user equipment.

27. The radio link failure statistics method according to claim 25 or 26, wherein the configuration reason of the mobility parameter comprises mobility load balance MLB or energy conservation; and
the collecting statistics, by the source base station, on the number of times of an abnormal handover in a classifying manner according to a configuration reason of the mobility parameter comprises:
collecting statistics, by the source base station, on the number of times of an abnormal handover according to the MLB or the energy conservation separately.

28. The radio link failure statistics method according to any one of claims 25 to 27, wherein the method further comprises:
receiving, by the source base station, an RRC reestablishment request message that is sent by the user equipment after a handover occurs too late; and
sending, by the source base station, a first radio link failure indication to the target base station.

29. A radio link failure statistics method, comprising:
receiving, by a first target base station, a first radio link failure indication sent by a source base station;
acquiring, by the first target base station according to the first radio link failure indication, that a mobility parameter was delivered by the source base station to a user equipment; and
collecting statistics, by the first target base station, on the number of times of an abormal handover in a classifying manner according to a configuration reason of the mobility parameter.

30. The radio link failure statistics method according to claim 29, further comprising:
recording, by the first target base station, that a too late handover from the first target base station to the source base station occurs; wherein
the collecting statistics, by the first target base station, on the number of times of an abnormal handover in a classifying manner according to a configuration reason of the mobility parameter comprises:
receiving, by the first target base station, a second radio link failure indication sent by a second target base station, wherein the second target base station is a base station to which the user equipment sends a new RRC establishment request message after reestablishment fails; and
acquiring, by the first target base station according to the second radio link failure indication, that the too late handover from the first target base station to the source base station is consistent with a too late handover that was recorded, and that a reestablishment cell identifier in the second radio link failure indication is a target cell comprised in the first target base station, and collecting statistics on the number of times of an abnormal handover in a classifying manner according to the configuration reason of the mobility parameter.

31. The radio link failure statistics method according to claim 29 or 30, further comprising:
sending, by the first target base station, a handover report to the source base station, wherein the handover report carries the configuration reason of the mobility parameter.

32. The radio link failure statistics method according to claim 29, further comprising:
storing, by the first target base station, a cell radio network temporary identifier CRNTI in the first radio link failure indication; and
receiving, by the first target base station, a second radio link failure indication sent by a second target base station, wherein the second target base station is a base station to which the user equipment sends a new RRC establishment request message after reestablishment fails, the second radio link failure indication comprises a radio link failure report, and the radio link failure report carries a CRNTI of the user equipment; wherein
the collecting statistics, by the first target base station, on the number of times of an abnormal handover in a classifying manner according to a configuration reason of the mobility parameter comprises:
when the stored CRNTI is the same as the CRNTI carried in the radio link failure report, collecting statistics, by the first target base station, on the number of times of an abnormal handover in a classifying manner according to the configuration reason of the mobility parameter.

33. The radio link failure statistics method according to claim 29, further comprising:
when the first target base station acquires an RRC reestablishment message that is sent to the source base station when the user equipment has just experienced one successful handover and a dwell time of the user equipment in the first target base station is less than a preset threshold, storing, by the first target base station, a CRNTI in the first radio link failure indication;
receiving, by the first target base station, a second radio link failure indication sent by a second target base station, wherein the second target base station is a base station to which the user equipment sends a new RRC establishment request message after reestablishment fails, the second radio link failure indication comprises a radio link failure report, and the radio link failure report carries a CRNTI of the user equipment; and
when the stored CRNTI is the same as the CRNTI carried in the radio link failure report, sending, by the first target base station, a handover report to the source base station, wherein the handover report carries the configuration reason of the mobility parameter.

34. A base station, comprising:
a receiver, configured to send identifier information to a user equipment, wherein the identifier information is used to indicate a configuration reason of a mobility parameter, wherein
the receiver is further configured to receive a first radio link failure indication sent by a first target base station; and
the first radio link failure indication has the configuration reason of the mobility parameter.

35. The base station according to claim 34, wherein:
if reestablishment by the user equipment fails, the first radio link failure indication carries the configuration reason of the mobility parameter; and
if the reestablishment by the user equipment succeeds, a radio link failure report comprised in the first radio link failure indication carries the configuration reason of the mobility parameter, wherein the second target base station is a base station to which the user equipment sends a new RRC establishment request message after the reestablishment fails.

36. The base station according to claim 35, wherein:
if the reestablishment by the user equipment fails, the receiver is further configured to receive a second radio link failure indication sent by the second target base station, wherein the second radio link failure indication comprises the radio link failure report, and the radio link failure report comprised in the second radio link failure indication carries the configuration reason of the mobility parameter.

37. The base station according to claim 36, further comprising:
a processor, configured to collect statistics on the number of times of an abnormal handover in a classifying manner according to the configuration reason of the mobility parameter which is carried in the first radio link failure indication, or carried in the radio link failure report comprised in the first radio link failure indication, or carried in the radio link failure report comprised in the second radio link failure indication.

38. The base station according to any one of claims 34 to 37, wherein:
the identifier information is carried by a radio resource control reconfiguration message or a handover command.

39. The base station according to any one of claims 34 to 38, wherein:
the mobility parameter is a cell individual offset CIO.

40. The base station according to any one of claims 34 to 39, wherein:
the configuration reason of the mobility parameter is mobility load balance MLB or energy conservation.

41. A base station, comprising:
a receiver, configured to receive a first radio link failure indication sent by a source base station, wherein the first radio link failure indication is sent by the source base station to the base station after the source base station receives a radio resource control RRC reestablishment request message sent by a user equipment, and the first radio link failure indication and the RRC reestablishment request message have a configuration reason of a mobility parameter.

42. The base station according to claim 41, wherein
if reestablishment by the user equipment fails, the first radio link failure indication carries the configuration reason of the mobility parameter; and
if the reestablishment by the user equipment succeeds, the first radio link failure indication comprises a radio link failure report, and the radio link failure report carries the configuration reason of the mobility parameter.

43. The base station according to claim 40 or 41, further comprising:
a transmitter, configured to send a handover report to the source base station, wherein the handover report carries the configuration reason of the mobility parameter.

44. The base station according to any one of claims 40 to 43, wherein:
the source base station sends, to the user equipment, identifier information to carry the configuration reason of the mobility parameter, wherein the identifier information further carries cell information, and the cell information is a source cell identifier and a target cell identifier at which the mobility parameter aims.

45. The base station according to claim 42, further comprising:
a processor, configured to: if the reestablishment by the user equipment fails, collect statistics on the number of times of an abnormal handover in a classifying manner according to the configuration reason of the mobility parameter.

46. The base station according to any one of claims 42 to 45, wherein:
the receiver is further configured to receive a second radio link failure indication sent by a second target base station, wherein the second radio link failure indication has the configuration reason of the mobility parameter, and the second target base station is a base station to which the user equipment sends a new RRC establishment request message after the reestablishment with the base station fails.

47. The base station according to any one of claims 41 to 46, wherein:
the mobility parameter is a cell individual offset CIO.

48. The base station according to any one of claims 41 to 47, wherein:
the configuration reason of the mobility parameter is mobility load balance MLB or energy conservation.

49. A base station, comprising:
a transmitter, configured to send identifier information to a user equipment, wherein the identifier information is used to indicate a configuration reason of a mobility parameter;
a receiver, configured to receive a radio resource control RRC reestablishment request message sent by the user equipment, wherein the RRC reestablishment request message has the configuration reason of the mobility parameter; and
a processor, configured to determine that a handover occurs on the user equipment too early, and collect statistics on the number of times of an abormal handover in a classifying manner according to the configuration reason of the mobility parameter.

50. The base station according to claim 49, wherein:
the mobility parameter is a cell individual offset CIO.

51. The base station according to claim 49 or 50, wherein
the configuration reason of the mobility parameter is mobility load balance MLB or energy conservation.

52. A user equipment, comprising:
a receiver, configured to receive identifier information sent by a source base station, wherein the identifier information has a configuration reason of a first mobility parameter; and
a processor, configured to save the configuration reason of the first mobility parameter in a radio link failure report or a radio resource control RRC reestablishment request message.

53. The user equipment according to claim 52, wherein the processor is further configured to:
if the user equipment is successfully handed over from the source base station to a target base station, and when a configuration reason of a second mobility parameter in a received radio resource control reconfiguration message is the same as the configuration reason of the first mobility parameter, continue to save the configuration reason of the first mobility parameter; and
when the configuration reason of the second mobility parameter is different from the configuration reason of the first mobility parameter, update the configuration reason of the first mobility parameter in the identifier information to be the configuration reason of the second mobility parameter.

54. A base station, comprising:
a receiver, configured to receive a radio resource control RRC reestablishment request message that is sent by a user equipment after a handover occurs too early; and
a processor, configured to acquire, according to the RRC reestablishment request message, that a mobility parameter was delivered to the user equipment, and collect statistics on the number of times of an abnormal handover in a classifying manner according to a configuration reason of the mobility parameter.

55. The base station according to claim 54, wherein the processor is specifically configured to:
query context of the user equipment according to a cell radio network temporary identifier CRNTI in the RRC reestablishment request message;
acquire, according to the context, that the mobility parameter was delivered to the user equipment; and
collect statistics on the number of times of an abnormal handover in a classifying manner according to the configuration reason of the mobility parameter.

56. The base station according to claim 54 or 55, wherein:
the configuration reason of the mobility parameter comprises mobility load balance MLB or energy conservation.

57. The base station according to any one of claims 54 to 56, wherein:
the receiver is further configured to receive an RRC reestablishment request message that is sent by the user equipment after a handover occurs too late; and
the base station further comprises a transmitter, configured to send a first radio link failure indication to a target base station.

58. A base station, comprising:
a receiver, configured to receive a first radio link failure indication sent by a source base station; and
a processor, configured to acquire, according to the first radio link failure indication, that a mobility parameter was delivered by the source base station to a user equipment, wherein
the processor is further configured to collect statistics on the number of times of an abnormal handover in a classifying manner according to a configuration reason of the mobility parameter.

59. The base station according to claim 58, wherein:
the receiver is further configured to receive a second radio link failure indication sent by a second target base station, wherein the second target base station is a base station to which the user equipment sends a new RRC establishment request message after reestablishment fails; and
the processor is specifically configured to:
record that a too late handover from the base station to the source base station occurs; and
acquire, according to the second radio link failure indication, that the too late handover from the base station to the source base station is consistent with a too late handover that was recorded, and that a reestablishment cell identifier in the second radio link failure indication is a target cell comprised in the base station, and collect statistics on the number of times of an abnormal handover in a classifying manner according to the configuration reason of the mobility parameter.

60. The base station according to claim 58 or 59, further comprising:
a transmitter, configured to send a handover report to the source base station, wherein the handover report carries the configuration reason of the mobility parameter.

61. The base station according to claim 58, wherein:
the base station further comprises a memory, configured to store a cell radio network temporary identifier CRNTI in the first radio link failure indication, wherein
the receiver is further configured to receive a second radio link failure indication sent by a second target base station, wherein the second target base station is a base station to which the user equipment sends a new RRC establishment request message after reestablishment fails, the second radio link failure indication comprises a radio link failure report, and the radio link failure report carries a CRNTI of the user equipment; and
the processor is specifically configured to:
when the stored CRNTI is the same as the CRNTI carried in the radio link failure report, collect statistics on the number of times of an abnormal handover in a classifying manner according to the configuration reason of the mobility parameter.

62. The base station according to claim 60, wherein:
the base station further comprises a memory, configured to: when the base station acquires an RRC reestablishment request message that is sent to the source base station when the user equipment has just experienced one successful handover and a dwell time of the user equipment in the base station is less than a preset threshold, store a CRNTI in the first radio link failure indication, wherein
the receiver is further configured to receive a second radio link failure indication sent by a second target base station, wherein the second target base station is a base station to which the user equipment sends a new RRC establishment request message after reestablishment fails, the second radio link failure indication comprises a radio link failure report, and the radio link failure report carries a CRNTI of the user equipment; and
the transmitter is further configured to: when the stored CRNTI is the same as the CRNTI carried in the radio link failure report, enable the first target base station to send a handover report to the source base station, wherein the handover report carries the configuration reason of the mobility parameter.
